(19) Europäisches Patentamt European Patent Office Office européen des brevets

(11) EP 4 749 579 A1

(12) **EUROPEAN PATENT APPLICATION**
published in accordance with Art. 153(4) EPC

(43) Date of publication:
27.05.2026 Bulletin 2026/22

(21) Application number: 24921677.1

(22) Date of filing: 29.11.2024

(51) International Patent Classification (IPC):
G06T 17/00 (2006.01)    G06T 19/20 (2011.01)
G06T 15/20 (2011.01)    G06T 7/77 (2017.01)

(52) Cooperative Patent Classification (CPC):
G06T 7/77; G06T 15/20; G06T 17/00; G06T 19/20

(86) International application number:
PCT/CN2024/135613

(87) International publication number:
WO 2025/161655 (07.08.2025 Gazette 2025/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 02.02.2024 CN 202410157546
13.09.2024 CN 202411291776

(71) Applicant: HUAWEI TECHNOLOGIES CO., LTD.
Shenzhen 518129 (CN)

(72) Inventors:
• TANG, Xiao
Shenzhen, Guangdong 518129 (CN)

• LIN, Jiaqi
Shenzhen, Guangdong 518129 (CN)
• LI, Zhihao
Shenzhen, Guangdong 518129 (CN)
• LIU, Shiyong
Shenzhen, Guangdong 518129 (CN)
• LIU, Jianzhuang
Shenzhen, Guangdong 518129 (CN)
• WU, Xiaofei
Shenzhen, Guangdong 518129 (CN)
• XU, Songcen
Shenzhen, Guangdong 518129 (CN)

(74) Representative: Gill Jennings & Every LLP
The Broadgate Tower
20 Primrose Street
London EC2A 2ES (GB)

(54) **THREE-DIMENSIONAL RECONSTRUCTION METHOD, DATA PROCESSING METHOD, RENDERING METHOD AND APPARATUS**

(57) A three-dimensional reconstruction method, a data processing method, a rendering method, and an apparatus are disclosed and are applied to the field of artificial intelligence, to assign a plurality of images in a scene to a plurality of cells in the scene, and perform scene reconstruction based on at least one image in each cell, to implement block-based scene reconstruction. The three-dimensional reconstruction method includes: obtaining a plurality of images for a scene, where the scene includes a plurality of cells; assigning the plurality of images to the plurality of cells based on poses of photographing devices corresponding to the plurality of images, to obtain at least one image in each cell; obtaining at least one three-dimensional Gaussian body in each cell based on the at least one image in each cell, where the at least one three-dimensional Gaussian body is used to represent the cell in the scene; and combining the at least one three-dimensional Gaussian body in each cell to obtain a combined three-dimensional Gaussian body, where the combined three-dimensional Gaussian body represents the scene.

FIG. 2

**Description**

This application claims priorities to Chinese Patent Application No. 202410157546.1, filed with the China National Intellectual Property Administration on February 2, 2024 and entitled "THREE-DIMENSIONAL RECONSTRUCTION METHOD, DATA PROCESSING METHOD, RENDERING METHOD, AND APPARATUS", and to Chinese Patent Application No. 202411291776.3, filed with the China National Intellectual Property Administration on September 13, 2024 and entitled "THREE-DIMENSIONAL RECONSTRUCTION METHOD, DATA PROCESSING METHOD, RENDERING METHOD, AND APPARATUS", both of which are incorporated herein by reference in their entireties.

**TECHNICAL FIELD**

The present disclosure relates to the field of artificial intelligence, and in particular, to a three-dimensional reconstruction method, a data processing method, a rendering method, and an apparatus.

**BACKGROUND**

Three-dimensional reconstruction (3D Reconstruction) refers to establishing a mathematical model suitable for computer representation and processing for a three-dimensional object, is a basis for processing, operating, and analyzing properties of the three-dimensional object in a computer environment, and is also a key technology for establishing virtual reality that expresses an objective world in a computer.

Currently, in an existing solution, a neural radiance field (Neural Radiance Fields, NeRF) and a three-dimensional Gaussian splatting (3D Gaussian Splatting, 3DGS) method are mainly used for scene reconstruction. The NeRF can reconstruct a three-dimensional scene based on an image or a video, and extract a geometric shape and texture information of an object from images of a plurality of viewing angles by using a deep learning technology. Therefore, the NeRF can present a highly realistic three-dimensional model at any angle and distance. However, this method requires a large amount of computing resources and time for training, and cannot balance rendering quality and speed at the same time. Although the 3DGS method can complete high-quality scene reconstruction based on the image or the video and implement real-time rendering, the method cannot be applied to reconstruction of a large scene.

Because high-quality large-scene reconstruction and real-time rendering can provide users with an immersive online visit experience, implementing high-quality large-scene reconstruction and real-time rendering becomes an urgent problem to be resolved currently.

**SUMMARY**

Embodiments of the present disclosure provide a three-dimensional reconstruction method, a data processing method, a rendering method, and an apparatus, to assign a plurality of images in a scene to a plurality of cells in the scene, and perform scene reconstruction based on at least one image in each cell, to implement block-based scene reconstruction.

In view of this, according to a first aspect, the present disclosure provides a three-dimensional reconstruction method, including: first, obtaining a plurality of images for a scene, where the scene includes a plurality of cells; then, assigning the plurality of images to the plurality of cells based on poses of photographing devices corresponding to the plurality of images, so that each cell in the scene includes at least one image; obtaining at least one three-dimensional Gaussian body in each cell based on the at least one image in each cell in the scene, where the at least one three-dimensional Gaussian body is used to represent the cell in the scene; and combining the at least one three-dimensional Gaussian body in each cell to obtain a combined three-dimensional Gaussian body, where the combined three-dimensional Gaussian body represents the scene.

In the embodiments of the present disclosure, the scene is partitioned into the cells, and scene reconstruction is separately performed on each cell based on the image in each cell in a three-dimensional Gaussian splatting manner, to implement block-based scene reconstruction. In addition, a quantity of three-dimensional Gaussian bodies in each cell is less than a quantity of three-dimensional Gaussian bodies in the scene, to improve scene reconstruction precision and improve scene reconstruction quality.

In a possible implementation, assigning the plurality of images to the plurality of cells based on the poses of the photographing devices corresponding to the plurality of images, to obtain the at least one image in each cell may include: determining, based on the pose of the photographing device corresponding to each image, projection information of each cell in the photographing device corresponding to each image, where the projection information includes a projection area of each cell in the photographing device; and assigning each image to a corresponding cell in the plurality of cells based on the projection information of each cell in the photographing device corresponding to each image, to obtain the at least one image in each cell.

In this embodiment of the present disclosure, the images may be classified based on the pose of the photographing device, and visibility of the photographing device is fully considered. The images may be assigned based on the projection area of each cell in each photographing device, so that accuracy of assigning the images to corresponding cells is improved, thereby improving scene reconstruction quality.

In a possible implementation, the method further includes: obtaining a plurality of pieces of point cloud data corresponding to each image; and assigning the plurality of pieces of point cloud data based on a pose corresponding to each image, to obtain a cell point cloud of each cell, where the cell point cloud includes at least one piece of point cloud data, and the cell point cloud of each cell is used to obtain the three-dimensional Gaussian body in each cell.

In a possible implementation, assigning the plurality of pieces of point cloud data based on the pose corresponding to each image, to obtain the cell point cloud of each cell may include: determining, based on the pose corresponding to each image, a point cloud ratio of a photographing device corresponding to each image, where the point cloud ratio is a ratio of a quantity of point clouds of each cell observed by the photographing device to a quantity of total point cloud data observed by the photographing device; and assigning the plurality of pieces of point cloud data to corresponding cells in the plurality of cells based on the point cloud ratio of the photographing device corresponding to each image.

In a possible implementation, assigning the plurality of pieces of point cloud data to the corresponding cells in the plurality of cells based on the point cloud ratio of the photographing device corresponding to each image may include: determining a photographing device in each cell based on the point cloud ratio of the photographing device corresponding to each image; and assigning the plurality of pieces of point cloud data to the corresponding cells in the plurality of cells based on the photographing device in each cell, to obtain the at least one piece of point cloud data of each cell.

In a possible implementation, the method may further include: optimizing a parameter of the three-dimensional Gaussian body to obtain an optimized three-dimensional Gaussian body, where the parameter is used to adjust an appearance parameter of the three-dimensional Gaussian body after rendering.

In a possible implementation, optimizing the parameter of the three-dimensional Gaussian body to obtain the optimized three-dimensional Gaussian body may include: rendering the three-dimensional Gaussian body to obtain a first rendered image; analyzing the first rendered image and an appearance latent variable by using a neural network model, to obtain a second rendered image, where the appearance latent variable is used to identify the first rendered image; and optimizing the parameter of the three-dimensional Gaussian body based on a difference between the first rendered image and a sample image and a difference between the second rendered image and the sample image, to obtain the optimized three-dimensional Gaussian body.

In this embodiment of the present disclosure, the difference between the second rendered image and the sample image may be further considered, to optimize the parameter of the three-dimensional Gaussian body. The appearance parameters of the second rendered image are consistent. The second rendered image and the sample image are additionally considered for comparison, so that brightness of images rendered based on the optimized three-dimensional Gaussian body can be consistent, and artifacts caused by different image exposure parameters can be reduced, thereby improving rendering quality.

In a possible implementation, analyzing the first rendered image and the appearance latent variable by using the neural network model, to obtain the second rendered image includes: performing down-sampling on the first rendered image to obtain a temporary rendered image; and analyzing the temporary rendered image and the appearance latent variable by using the neural network model, to obtain the second rendered image.

In a possible implementation, optimizing the parameter of the three-dimensional Gaussian body based on the difference between the first rendered image and the sample image and the difference between the second rendered image and the sample image may include: calculating a first loss function between the first rendered image and the sample image; calculating a second loss function between the second rendered image and the sample image; and optimizing the parameter of the three-dimensional Gaussian body based on the first loss function and the second loss function, to obtain the optimized three-dimensional Gaussian body.

In a possible implementation, optimizing the parameter of the three-dimensional Gaussian body to obtain the optimized three-dimensional Gaussian body may include: performing analysis by using a fully connected network based on the pose, to obtain an appearance-related parameter, where the appearance-related parameter is used to adjust an appearance parameter of a rendered image of the three-dimensional Gaussian body; and optimizing the parameter of the three-dimensional Gaussian body based on the appearance-related parameter.

According to a second aspect, the present disclosure provides a data processing method, including: obtaining an appearance latent variable, where the appearance latent variable is used to identify a rendered image obtained by rendering a three-dimensional Gaussian body in a cell; and optimizing a parameter of the three-dimensional Gaussian body based on the appearance latent variable, to obtain an optimized three-dimensional Gaussian body, where the optimized three-dimensional Gaussian body is used to represent the cell.

In a possible implementation, optimizing the parameter of the three-dimensional Gaussian body based on the appearance latent variable, to obtain the optimized three-dimensional Gaussian body may include: rendering the three-dimensional Gaussian body in the cell to obtain a first rendered image; analyzing the first rendered image and the appearance latent variable to obtain a second rendered image; and optimizing the parameter of the three-dimensional Gaussian body based on a difference between the first rendered image and a sample image and a difference between the second rendered image and the sample image, to obtain the optimized three-dimensional Gaussian body.

In a possible implementation, optimizing the parameter of the three-dimensional Gaussian body based on the appearance latent variable, to obtain the optimized three-dimensional Gaussian body may include: rendering the three-dimensional Gaussian body in the cell to obtain a first rendered image; analyzing the first rendered image and the appearance latent variable to obtain a second rendered image; and optimizing the parameter of the three-dimensional Gaussian body based on the difference between the second rendered image and the sample image, to obtain the optimized three-dimensional Gaussian body.

In a possible implementation, analyzing the first rendered image and the appearance latent variable to obtain the second rendered image may include: performing down-sampling on the first rendered image to obtain a temporary rendered image; and analyzing the temporary rendered image and a feature parameter by using a neural network model, to obtain the second rendered image.

In a possible implementation, optimizing the parameter of the three-dimensional Gaussian body based on the difference between the first rendered image and the sample image and the difference between the second rendered image and the sample image, to obtain the optimized three-dimensional Gaussian body may include: calculating a first loss function between the first rendered image and the sample image; calculating a second loss function between the second rendered image and the sample image; and optimizing the parameter of the three-dimensional Gaussian body based on the first loss function and the second loss function, to obtain the optimized three-dimensional Gaussian body.

In a possible implementation, optimizing the parameter of the three-dimensional Gaussian body based on the difference between the second rendered image and the sample image, to obtain the optimized three-dimensional Gaussian body may include: calculating the second loss function between the second rendered image and the sample image; and optimizing the parameter of the three-dimensional Gaussian body based on the second loss function, to obtain the optimized three-dimensional Gaussian body.

In a possible implementation, optimizing the parameter of the three-dimensional Gaussian body based on the appearance latent variable, to obtain the optimized three-dimensional Gaussian body may include: determining an appearance-related parameter based on the appearance latent variable, where the appearance-related parameter is used to adjust an appearance parameter of a rendered image of the three-dimensional Gaussian body; and optimizing the parameter of the three-dimensional Gaussian body based on the appearance-related parameter.

According to a third aspect, the present disclosure provides a data processing method, including: obtaining, based on an image in a cell, a three-dimensional Gaussian body in the cell, where the cell is any one of a plurality of cells in a scene; rendering the three-dimensional Gaussian body to obtain a first rendered image; analyzing the first rendered image and a feature parameter by using a neural network model, to obtain a second rendered image, where the feature parameter is used to adjust an appearance parameter of the first rendered image; and optimizing a parameter of the three-dimensional Gaussian body based on a difference between the first rendered image and a sample image and a difference between the second rendered image and the sample image, to obtain an optimized three-dimensional Gaussian body, where the optimized three-dimensional Gaussian body is used to represent the cell.

In a possible implementation, analyzing the first rendered image and the feature parameter by using the neural network model, to obtain the second rendered image may include: performing down-sampling on the first rendered image to obtain a temporary rendered image; and analyzing the temporary rendered image and a feature parameter by using a neural network model, to obtain the second rendered image.

In a possible implementation, optimizing the parameter of the three-dimensional Gaussian body based on the difference between the first rendered image and the sample image and the difference between the second rendered image and the sample image, to obtain the optimized three-dimensional Gaussian body may include: calculating a first loss function between the first rendered image and the sample image; calculating a second loss function between the second rendered image and the sample image; and optimizing the parameter of the three-dimensional Gaussian body based on the first loss function and the second loss function, to obtain the optimized three-dimensional Gaussian body.

According to a fourth aspect, the present disclosure provides a rendering method, including: obtaining a pose of a photographing device in a scene, where the scene is partitioned into a plurality of cells; determining, based on the pose of the photographing device, a three-dimensional Gaussian body in a cell corresponding to the photographing device; rendering a three-dimensional Gaussian body in each cell to obtain a rendered image in each cell; and combining rendered images of all cells to obtain a target rendered image.

In this embodiment of the present disclosure, each block cell may be separately processed based on a scene blocking policy, so that a calculation amount is reduced, and a rendering speed is improved, to implement real-time rendering.

In a possible implementation, determining, based on the pose of the photographing device, the three-dimensional Gaussian body in the cell corresponding to the photographing device may include: determining, based on the pose of the photographing device, the cell corresponding to the photographing device; and deleting an invisible three-dimensional Gaussian body in the cell based on marking information of the three-dimensional Gaussian body in the cell, to obtain the three-dimensional Gaussian body in the cell corresponding to the photographing device.

In this embodiment of the present disclosure, the invisible three-dimensional Gaussian body in the cell may be deleted, and simply a visible three-dimensional Gaussian body in the cell is rendered, so that a calculation amount during rendering of the three-dimensional Gaussian body is effectively reduced, and a rendering speed is improved. In addition, the invisible three-dimensional Gaussian body in the cell is deleted, thereby effectively reducing storage space. It may be understood that, in this embodiment of the present disclosure, that the invisible three-dimensional Gaussian body in the cell is deleted indicates that when the three-dimensional Gaussian body in the cell is rendered, the invisible three-dimensional Gaussian body in the cell is excluded, and the invisible three-dimensional Gaussian body in the cell is not rendered. This does not mean that the invisible three-dimensional Gaussian body in the cell does not exist. The invisible three-dimensional Gaussian body in the cell may be visible to another cell, and may be rendered to obtain a rendered image of the another cell.

In a possible implementation, rendering the three-dimensional Gaussian body in each cell to obtain the rendered image in each cell may include: calculating a depth between the three-dimensional Gaussian body in each cell and the photographing device; determining a target three-dimensional Gaussian body in each cell based on the depth and a projection area of the three-dimensional Gaussian body in each cell; and rendering the target three-dimensional Gaussian body in each cell to obtain the rendered image of each scene.

In a possible implementation, determining the target three-dimensional Gaussian body in each cell based on the depth and the projection area of the three-dimensional Gaussian body in each cell may include: determining, based on the depth, a to-be-deleted three-dimensional Gaussian body in each cell from the three-dimensional Gaussian body in each cell, where the depth is positively correlated with a quantity of three-dimensional Gaussian bodies to be deleted; determining, based on the depth, a first preset threshold of the projection area of the three-dimensional Gaussian body in each cell; and deleting, based on the to-be-deleted three-dimensional Gaussian body in each cell and the first preset threshold, a three-dimensional Gaussian body whose projection area is less than the preset threshold from the to-be-deleted three-dimensional Gaussian body, to obtain the target three-dimensional Gaussian body.

In this embodiment of the present disclosure, layered rendering may be performed based on both the depth and the projection area of the three-dimensional Gaussian body. Rendering of a three-dimensional Gaussian body at a long distance can be reduced, and a three-dimensional Gaussian body whose projection area is less than a preset value can be deleted, to reduce a quantity of three-dimensional Gaussian bodies to be rendered, thereby improving a rendering speed.

In a possible implementation, rendering the three-dimensional Gaussian body in each cell to obtain the rendered image in each cell may include: randomly deleting a preset quantity of three-dimensional Gaussian bodies from the three-dimensional Gaussian body in each cell, to obtain a target three-dimensional Gaussian body in each cell; and rendering the target three-dimensional Gaussian body in each cell to obtain the rendered image in each cell.

In a possible implementation, rendering the three-dimensional Gaussian body in each cell to obtain the rendered image in each cell may include: calculating a first volume of the three-dimensional Gaussian body in each cell; deleting, based on the first volume, a three-dimensional Gaussian body whose first volume exceeds a second preset threshold, to obtain the target three-dimensional Gaussian body; and rendering the target three-dimensional Gaussian body in each cell to obtain the rendered image in each cell.

In a possible implementation, rendering the three-dimensional Gaussian body in each cell to obtain the rendered image in each cell may include: randomly determining a to-be-deleted three-dimensional Gaussian body from the three-dimensional Gaussian body in each cell; calculating a second volume of the three-dimensional Gaussian body in each cell; deleting a three-dimensional Gaussian body whose second volume exceeds a third preset threshold from the to-be-deleted three-dimensional Gaussian body, to obtain the target three-dimensional Gaussian body; and rendering the target three-dimensional Gaussian body in each cell, to obtain the rendered image in each cell.

According to a fifth aspect, the present disclosure provides a rendering method, including: determining, based on marking information of a three-dimensional Gaussian body in a cell, a target three-dimensional Gaussian body from the three-dimensional Gaussian body, where the target three-dimensional Gaussian body is a three-dimensional Gaussian body identified by a photographing device in the cell; and rendering the target three-dimensional Gaussian body to obtain a rendered image in the cell.

In a possible implementation, determining, based on the marking information of the three-dimensional Gaussian body in the cell, the target three-dimensional Gaussian body from the three-dimensional Gaussian body may include: determining, based on the marking information of the three-dimensional Gaussian body in the cell, a visible three-dimensional Gaussian body in the cell as the target three-dimensional Gaussian body.

According to a sixth aspect, the present disclosure provides a rendering method, including: obtaining, based on an image in a cell, a three-dimensional Gaussian body in the cell; determining a target three-dimensional Gaussian body in the cell from the three-dimensional Gaussian body in the cell based on one or more of a depth of the three-dimensional Gaussian body and a projection area or a volume of the three-dimensional Gaussian body, where a quantity of target three-dimensional Gaussian bodies is less than a quantity of three-dimensional Gaussian bodies; and rendering the target three-dimensional Gaussian body to obtain a rendered image in the cell.

In a possible implementation, determining the target three-dimensional Gaussian body in the cell from the three-dimensional Gaussian body in the cell based on one or more of the depth and the projection area of the three-dimensional Gaussian body or the volume of the three-dimensional Gaussian body may include: determining the target three-dimensional Gaussian body in the cell from the three-dimensional Gaussian body in the cell based on the depth of the three-dimensional Gaussian body and the projection area; and determining the target three-dimensional Gaussian body in the cell from the three-dimensional Gaussian body in the cell based on the volume of the three-dimensional Gaussian body.

In a possible implementation, determining the target three-dimensional Gaussian body in the cell from the three-dimensional Gaussian body in the cell based on the depth and the projection area of the three-dimensional Gaussian body may include: determining, based on the depth of the three-dimensional Gaussian body, a to-be-rendered three-dimensional Gaussian body in the cell from the three-dimensional Gaussian body in the cell; determining, based on the depth of the three-dimensional Gaussian body, a first preset value of the projection area of the three-dimensional Gaussian body in the cell; and determining, based on the to-be-rendered three-dimensional Gaussian body in the cell and the first preset threshold, a three-dimensional Gaussian body whose projection area is greater than or equal to the first preset value in the to-be-rendered three-dimensional Gaussian body as the target three-dimensional Gaussian body.

In a possible implementation, determining the target three-dimensional Gaussian body in the cell from the three-dimensional Gaussian body in the cell based on the volume of the three-dimensional Gaussian body may include: calculating a first volume of the three-dimensional Gaussian body in the cell; and determining a three-dimensional Gaussian body whose first volume is less than or equal to a second preset threshold as the target three-dimensional Gaussian body.

In a possible implementation, determining the target three-dimensional Gaussian body in the cell from the three-dimensional Gaussian body in the cell based on the volume of the three-dimensional Gaussian body may include: randomly determining the to-be-rendered three-dimensional Gaussian body from the three-dimensional Gaussian body in the cell; calculating a second volume of the three-dimensional Gaussian body in the cell; and determining a three-dimensional Gaussian body whose second volume is less than or equal to a third preset threshold in the to-be-rendered three-dimensional Gaussian body as the target three-dimensional Gaussian body.

In a possible implementation, before rendering the target three-dimensional Gaussian body to obtain the rendered image of the cell, the method may further include: randomly determining a preset quantity of three-dimensional Gaussian bodies from the three-dimensional Gaussian body in the cell as the target three-dimensional Gaussian body.

In a possible implementation, the cell is any one of the plurality of cells in the first aspect.

According to a seventh aspect, the present disclosure provides a three-dimensional reconstruction apparatus, including:

an obtaining module, configured to obtain a plurality of images for a scene, where the scene includes a plurality of cells; a assigning module, configured to assign the plurality of images to the plurality of cells based on poses of photographing devices corresponding to the plurality of images, to obtain at least one image in each cell, where the obtaining module is further configured to obtain at least one three-dimensional Gaussian body in each cell based on the at least one image in each cell, where the at least one three-dimensional Gaussian body is used to represent the cell in the scene; and a combination module, configured to combine the at least one three-dimensional Gaussian body in each cell to obtain a combined three-dimensional Gaussian body, where the combined three-dimensional Gaussian body represents the scene.

In a possible implementation, the assigning module is specifically configured to: determine, based on the pose of the photographing device corresponding to each image, projection information of each cell in the photographing device corresponding to each image, where the projection information includes a projection area of each cell in the photographing device; and assign each image to a corresponding cell in the plurality of cells based on the projection information of each cell in the photographing device corresponding to each image, to obtain the at least one image in each cell.

In a possible implementation, the apparatus may further include:

the obtaining module, further configured to obtain a plurality of pieces of point cloud data corresponding to each image; and

the assigning module, further configured to: assign the plurality of pieces of point cloud data based on a pose corresponding to each image, to obtain a cell point cloud of each cell, where the cell point cloud includes at least one piece of point cloud data, and the cell point cloud of each cell is used to obtain the three-dimensional Gaussian body in each cell.

In a possible implementation, the assigning module is specifically configured to: determine, based on the pose corresponding to each image, a point cloud ratio of a photographing device corresponding to each image, where the point cloud ratio is a ratio of a quantity of point clouds of each cell observed by the photographing device to a quantity of total point cloud data observed by the photographing device; and assign the plurality of pieces of point cloud data to corresponding cells in the plurality of cells based on the point cloud ratio of the photographing device corresponding to each image.

In a possible implementation, the assigning module is specifically configured to: determine a photographing device in each cell based on the point cloud ratio of the photographing device corresponding to each image; and assign the plurality of pieces of point cloud data to corresponding cells in the plurality of cells based on the photographing device in each cell, to obtain at least one piece of point cloud data of each cell.

In a possible implementation, the apparatus may further include:

an optimization module, configured to optimize a parameter of the three-dimensional Gaussian body to obtain an optimized three-dimensional Gaussian body, where the parameter is used to adjust an appearance parameter of the three-dimensional Gaussian body after rendering.

In a possible implementation, the optimization module is specifically configured to: render the three-dimensional Gaussian body to obtain a first rendered image; analyze the first rendered image and an appearance latent variable by using a neural network model, to obtain a second rendered image, where the appearance latent variable is used to identify the first rendered image; and optimize the parameter of the three-dimensional Gaussian body based on a difference between the first rendered image and a sample image and a difference between the second rendered image and the sample image, to obtain the optimized three-dimensional Gaussian body.

In a possible implementation, the optimization module is specifically configured to: perform down-sampling on the first rendered image to obtain a temporary rendered image; and analyze the temporary rendered image and the appearance latent variable by using the neural network model, to obtain the second rendered image.

In a possible implementation, the optimization module is specifically configured to: calculate a first loss function between the first rendered image and the sample image; calculate a second loss function between the second rendered image and the sample image; and optimize the parameter of the three-dimensional Gaussian body based on the first loss function and the second loss function, to obtain the optimized three-dimensional Gaussian body.

In a possible implementation, the optimization module is specifically configured to: perform analysis by using a fully connected network based on the pose, to obtain an appearance-related parameter, where the appearance-related parameter is used to adjust an appearance parameter of a rendered image of the three-dimensional Gaussian body; and optimize the parameter of the three-dimensional Gaussian body based on the appearance-related parameter.

According to an eighth aspect, the present disclosure provides a data processing apparatus, including:

an obtaining module, configured to obtain an appearance latent variable, where the appearance latent variable is used to identify a rendered image obtained by rendering a three-dimensional Gaussian body in a cell; and

an optimization module, configured to optimize a parameter of the three-dimensional Gaussian body based on the appearance latent variable, to obtain an optimized three-dimensional Gaussian body, where the optimized three-dimensional Gaussian body is used to represent the cell.

In a possible implementation, the foregoing optimization module is specifically configured to: render the three-dimensional Gaussian body in the cell to obtain a first rendered image; analyze the first rendered image and the appearance latent variable to obtain a second rendered image; and optimize the parameter of the three-dimensional Gaussian body based on a difference between the first rendered image and a sample image and a difference between the second rendered image and the sample image, to obtain the optimized three-dimensional Gaussian body.

In a possible implementation, the foregoing optimization module is specifically configured to: render the three-dimensional Gaussian body in the cell to obtain a first rendered image; analyze the first rendered image and the appearance latent variable to obtain a second rendered image; and optimize the parameter of the three-dimensional Gaussian body based on the difference between the second rendered image and the sample image, to obtain the optimized three-dimensional Gaussian body.

In a possible implementation, the foregoing optimization module is specifically configured to: perform down-sampling on the first rendered image to obtain a temporary rendered image; and analyze the temporary rendered image and a feature parameter by using a neural network model, to obtain the second rendered image.

In a possible implementation, the foregoing optimization module is specifically configured to: calculate a first loss function between the first rendered image and the sample image; calculate a second loss function between the second rendered image and the sample image; and optimize the parameter of the three-dimensional Gaussian body based on the first loss function and the second loss function, to obtain the optimized three-dimensional Gaussian body.

In a possible implementation, the foregoing optimization module is specifically configured to: calculate a second loss function between the second rendered image and the sample image; and optimize the parameter of the three-dimensional Gaussian body based on the second loss function, to obtain the optimized three-dimensional Gaussian body.

In a possible implementation, the foregoing optimization module is specifically configured to: determine an appearance-related parameter based on the appearance latent variable, where the appearance-related parameter is used to adjust an appearance parameter of a rendered image of the three-dimensional Gaussian body; and optimize the parameter of the three-dimensional Gaussian body based on the appearance-related parameter.

According to a ninth aspect, the present disclosure provides a data processing apparatus, including:

an obtaining module, configured to obtain, based on an image in a cell, a three-dimensional Gaussian body in the cell, where the cell is any one of a plurality of cells in a scene;
a rendering module, configured to render the three-dimensional Gaussian body to obtain a first rendered image;
an analysis module, configured to analyze the first rendered image and a feature parameter by using a neural network model, to obtain a second rendered image, where the feature parameter is used to adjust an appearance parameter of the first rendered image; and
an optimization module, configured to optimize a parameter of the three-dimensional Gaussian body based on a difference between the first rendered image and a sample image and a difference between the second rendered image and the sample image, to obtain an optimized three-dimensional Gaussian body, where the optimized three-dimensional Gaussian body is used to represent the cell.

According to a tenth aspect, the present disclosure provides a rendering apparatus, including:

an obtaining module, configured to obtain a pose of a photographing device in a scene, where the scene is partitioned into a plurality of cells;
a determining module, configured to determine, based on the pose of the photographing device, a three-dimensional Gaussian body in a cell corresponding to the photographing device;
a rendering module, configured to render a three-dimensional Gaussian body in each cell to obtain a rendered image in each cell; and
a combination module, configured to combine rendered images of all cells to obtain a target rendered image.

In a possible implementation, the determining module is specifically configured to: determine, based on the pose of the photographing device, the cell corresponding to the photographing device; and delete an invisible three-dimensional Gaussian body in the cell based on marking information of the three-dimensional Gaussian body in the cell, to obtain the three-dimensional Gaussian body in the cell corresponding to the photographing device.

In a possible implementation, the rendering module is specifically configured to: calculate a depth between the three-dimensional Gaussian body in each cell and the photographing device; determine a target three-dimensional Gaussian body in each cell based on the depth and a projection area of the three-dimensional Gaussian body in each cell; and render the target three-dimensional Gaussian body in each cell to obtain the rendered image in each cell.

In a possible implementation, the rendering module is specifically configured to: determine, based on the depth, a to-be-deleted three-dimensional Gaussian body in each cell from the three-dimensional Gaussian body in each cell; determine, based on the depth, a first preset threshold of the projection area of the three-dimensional Gaussian body in each cell; and delete, based on the to-be-deleted three-dimensional Gaussian body in each cell and the first preset threshold, a three-dimensional Gaussian body whose projection area is less than the preset threshold from the to-be-deleted three-dimensional Gaussian body, to obtain the target three-dimensional Gaussian body.

In a possible implementation, the rendering module is specifically configured to: randomly delete a preset quantity of three-dimensional Gaussian bodies from the three-dimensional Gaussian body in each cell, to obtain a target three-dimensional Gaussian body in each cell; and render the target three-dimensional Gaussian body in each cell to obtain the rendered image in each cell.

In a possible implementation, the rendering module is specifically configured to: calculate a first volume of the three-dimensional Gaussian body in each cell; delete, based on the first volume, a three-dimensional Gaussian body whose first volume exceeds a second preset threshold, to obtain the target three-dimensional Gaussian body; and render the target three-dimensional Gaussian body in each cell to obtain the rendered image in each cell.

In a possible implementation, the rendering module is specifically configured to: randomly determine a to-be-deleted three-dimensional Gaussian body from the three-dimensional Gaussian body in each cell; calculate a second volume of the three-dimensional Gaussian body in each cell; delete a three-dimensional Gaussian body whose second volume exceeds a third preset threshold from the to-be-deleted three-dimensional Gaussian body, to obtain the target three-dimensional Gaussian body; and render the target three-dimensional Gaussian body in each cell to obtain the rendered image in each cell.

According to an eleventh aspect, the present disclosure provides a rendering apparatus, including:

a determining module, configured to determine, based on marking information of a three-dimensional Gaussian body in a cell, a target three-dimensional Gaussian body from the three-dimensional Gaussian body, where the target three-dimensional Gaussian body is a three-dimensional Gaussian body identified by a photographing device in the cell; and

a rendering module, configured to render the target three-dimensional Gaussian body to obtain a rendered image in the cell.

In a possible implementation, the foregoing determining module is specifically configured to: determine, based on the marking information of the three-dimensional Gaussian body in the cell, a visible three-dimensional Gaussian body in the cell as the target three-dimensional Gaussian body.

According to a twelfth aspect, the present disclosure provides a rendering apparatus, including:

an obtaining module, configured to obtain, based on an image in a cell, a three-dimensional Gaussian body in the cell;

a determining module, configured to determine a target three-dimensional Gaussian body in the cell from the three-dimensional Gaussian body in the cell based on one or more of a depth of the three-dimensional Gaussian body and a projection area or a volume of the three-dimensional Gaussian body, where a quantity of target three-dimensional Gaussian bodies is less than a quantity of three-dimensional Gaussian bodies; and

a rendering module, configured to render the target three-dimensional Gaussian body to obtain a rendered image in the cell.

In a possible implementation, the foregoing determining module is specifically configured to: determine the target three-dimensional Gaussian body in the cell from the three-dimensional Gaussian body in the cell based on the depth and the projection area of the three-dimensional Gaussian body; and determine the target three-dimensional Gaussian body in the cell from the three-dimensional Gaussian body in the cell based on the volume of the three-dimensional Gaussian body.

In a possible implementation, the foregoing determining module is specifically configured to: determine, based on the depth of the three-dimensional Gaussian body, a to-be-rendered three-dimensional Gaussian body in the cell from the three-dimensional Gaussian body in the cell; determine, based on the depth of the three-dimensional Gaussian body, a first preset value of the projection area of the three-dimensional Gaussian body in the cell; and determine, based on the to-be-rendered three-dimensional Gaussian body in the cell and the first preset threshold, a three-dimensional Gaussian body whose projection area is greater than or equal to the first preset value in the to-be-rendered three-dimensional Gaussian body as the target three-dimensional Gaussian body.

In a possible implementation, the foregoing determining module is specifically configured to: calculate a first volume of the three-dimensional Gaussian body in the cell; and determine a three-dimensional Gaussian body whose first volume is less than or equal to a second preset threshold as the target three-dimensional Gaussian body.

In a possible implementation, the foregoing determining module is specifically configured to: randomly determine the to-be-rendered three-dimensional Gaussian body from the three-dimensional Gaussian body in the cell; calculate a second volume of the three-dimensional Gaussian body in the cell; and determine a three-dimensional Gaussian body whose second volume is less than or equal to a third preset threshold in the to-be-rendered three-dimensional Gaussian body as the target three-dimensional Gaussian body.

In a possible implementation, before rendering the target three-dimensional Gaussian body to obtain the rendered image of the cell, the foregoing determining module is further configured to: randomly determine a preset quantity of three-dimensional Gaussian bodies from the three-dimensional Gaussian body in the cell as the target three-dimensional Gaussian body.

In a possible implementation, the cell is any one of the plurality of cells in the seventh aspect.

According to a thirteenth aspect, the present disclosure provides a three-dimensional reconstruction apparatus. The three-dimensional reconstruction apparatus includes a processor, a memory, an input/output device, and a bus. The memory stores computer instructions. When the processor executes the computer instructions in the memory, the memory stores the computer instructions. When the processor executes the computer instruction in the memory, the processor is configured to implement the first aspect or any implementation of the first aspect.

According to a fourteenth aspect, the present disclosure provides a data processing apparatus. The data processing apparatus includes a processor, a memory, an input/output device, and a bus. The memory stores computer instructions. When the processor executes the computer instructions in the memory, the memory stores the computer instructions. When the processor executes the computer instructions in the memory, the processor is configured to implement the second aspect, the third aspect, any implementation of the second aspect, or any implementation of the third aspect.

According to a fifteenth aspect, the present disclosure provides a rendering apparatus. The rendering apparatus includes a processor, a memory, an input/output device, and a bus. The memory stores computer instructions. When the processor executes the computer instructions in the memory, the memory stores the computer instructions. When the processor executes the computer instructions in the memory, the processor is configured to implement any one of the fourth aspect, the fifth aspect, the sixth aspect, any implementation of the fourth aspect, any implementation of the fifth aspect, or any implementation of the sixth aspect.

According to a sixteenth aspect, an embodiment of the present disclosure provides a chip system. The chip system includes a processor and an input/output port. The processor is configured to implement a processing function in the method according to the first aspect, the second aspect, the third aspect, the fourth aspect, the fifth aspect, or the sixth aspect. The input/output port is configured to implement a transceiver function in the method according to the first aspect, the second aspect, the third aspect, the fourth aspect, the fifth aspect, or the sixth aspect.

In a possible design, the chip system further includes a memory. The memory is configured to store program instructions and data that are used to implement functions in the method according to the first aspect, the second aspect, the third aspect, the fourth aspect, the fifth aspect, or the sixth aspect.

The chip system may include a chip, or may include a chip and another discrete component.

According to a seventeenth aspect, an embodiment of the present disclosure provides a computer-readable storage medium. The computer-readable storage medium stores computer instructions. When the computer instructions are run on a computer, the computer is enabled to perform the method according to any one of the possible implementations of the first aspect, the second aspect, the third aspect, the fourth aspect, the fifth aspect, or the sixth aspect.

According to an eighteenth aspect, an embodiment of the present disclosure provides a computer program product. The computer program product includes a computer program or instructions. When the computer program or the instructions are run on a computer, the computer is enabled to perform the method according to any one of the possible implementations of the first aspect, the second aspect, the third aspect, the fourth aspect, the fifth aspect, or the sixth aspect.

**BRIEF DESCRIPTION OF DRAWINGS**

FIG. 1 is a diagram of a system architecture according to the present disclosure;

FIG. 2 is a schematic flowchart of a three-dimensional reconstruction method according to the present disclosure;

FIG. 3 is a diagram of selecting a photographing device based on a projection area of a bounding box of a scene cell in the photographing device;

FIG. 4 shows a process of selecting a camera and an image in scene partitioning according to the present disclosure;

FIG. 5 is a schematic flowchart of another three-dimensional reconstruction method according to the present disclosure;

FIG. 6 is a schematic flowchart of another three-dimensional reconstruction method according to the present disclosure;

FIG. 7 is a schematic flowchart of a data processing method according to the present disclosure;

FIG. 8 is a schematic flowchart of a rendering method according to the present disclosure;

FIG. 9 is a schematic flowchart of another rendering method according to the present disclosure;

FIG. 10 is a diagram of screening a visible three-dimensional Gaussian body when block rendering is performed in different scenes;

FIG. 11 is a schematic flowchart of another rendering method according to the present disclosure;

FIG. 12 is a schematic flowchart of another rendering method according to the present disclosure;

FIG. 13 is a diagram of screening based on a depth, an index number, and a projection area of a three-dimensional Gaussian body;

FIG. 14 is a schematic flowchart of another rendering method according to the present disclosure;

FIG. 15 is a diagram of a structure of a three-dimensional reconstruction apparatus according to the present disclosure;

FIG. 16 is a diagram of a structure of a data processing apparatus 1500 according to the present disclosure;

FIG. 17 is a diagram of a structure of a data processing apparatus 1600 according to the present disclosure;

FIG. 18 is a diagram of a structure of a rendering apparatus 1700 according to the present disclosure;

FIG. 19 is a diagram of a structure of a rendering apparatus 1800 according to the present disclosure;

FIG. 20 is a diagram of a structure of a rendering apparatus 1900 according to the present disclosure;

FIG. 21 is a diagram of a structure of another three-dimensional reconstruction apparatus according to the present disclosure;

FIG. 22 is a diagram of a structure of another data processing apparatus according to the present disclosure;

FIG. 23 is a diagram of a structure of another rendering apparatus according to the present disclosure; and

FIG. 24 is a diagram of a structure of a chip according to the present disclosure.

## DESCRIPTION OF EMBODIMENTS

The following describes the technical solutions in embodiments of the present disclosure with reference to the accompanying drawings in embodiments of the present disclosure. It is clear that the described embodiments are merely a part rather than all of embodiments of the present disclosure. All other embodiments obtained by a person skilled in the art based on embodiments of the present disclosure without creative efforts shall fall within the protection scope of the present disclosure.

The method provided in the present disclosure may be applied to an artificial intelligence (artificial intelligence, AI) scenario. AI uses a digital computer or a machine controlled by a digital computer to emulate and extend human intelligence, sense an environment, obtain knowledge, and use the knowledge to generate a best theory, method, technology, and application system. In other words, artificial intelligence is a branch of computer science and is intended to understand essence of intelligence and produce a new intelligent machine that can react in a manner similar to human intelligence. Artificial intelligence is to study design principles and implementation methods of various intelligent machines, to enable the machines to have perception, inference, and decision-making functions. Research in the field of artificial intelligence includes robotics, natural language processing, computer vision, decision-making and inference, human-machine interaction, recommendation and search, AI basic theories, and the like.

First, an overall working process of the artificial intelligence system is described. The following describes the above artificial intelligence subject framework from two dimensions: "intelligent information chain" (horizontal axis) and "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. A sensor is used to communicate with the outside. A computing capability is provided by an intelligent chip (a hardware acceleration chip a CPU, an NPU, a GPU, an ASIC, or an FPGA). The basic platform includes related platforms such as a distributed computing framework and a network for assurance and support, and may include cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

(4) General capability

After data processing mentioned above is performed on the data, some general capabilities may be further formed based on a data processing result. For example, the general capabilities may be an algorithm or a general system, for example, translation, text analysis, computer vision processing, speech recognition, and image recognition.

(5) Smart product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent products and industry application mainly include intelligent terminals, intelligent transportation, intelligent health care, autonomous driving, smart cities, and the like.

Embodiments of the present disclosure relate to related applications of a neural network. To better understand the solutions in embodiments of the present disclosure, the following first describes related terms and concepts of the neural network that may be used in the embodiments of the present disclosure.

(1) Neural network

A neural network may include a neural unit. The neural unit may be an operation unit that uses xs and an intercept 1 as inputs. An output of the operation unit may be shown in Formula (1-1):

$$h_{W,b}(x) = f(W^T x) = f(\sum_{s=1}^{n} W_s x_s + b)$$

s=1,2, ..., or n, n is a natural number greater than 1, Ws is a weight of xs, b is a bias of the neuron, and f is an activation function (activation functions) of the neuron, and is used to introduce a non-linear feature into the neural network to convert an input signal in the neuron into an output signal. The output signal of the activation function may be used as an input of a next convolutional layer, and the activation function may be a sigmoid function. The neural network is a network constituted by linking a plurality of single neural units together. To be specific, an output of a neural unit may be an input of another neural unit. An input of each neuron may be connected to a local receptive field of a previous layer to extract a feature of the local receptive field. The local receptive field may be a cell including several neurons.

(2) Convolutional neural network

The convolutional neural network (convolutional neuron network, CNN) is a deep neural network with a convolutional structure. The convolutional neural network includes a feature extractor that includes a convolutional layer and a sub-sampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neural units that are in a rectangular arrangement. Neural units in a same feature plane share a weight, and the weight shared herein is a convolution kernel. Weight sharing may be understood as that a feature extraction manner is irrelevant to a location. The convolution kernel may be formalized as a matrix of a random size. In a training process of the convolutional neural network, an appropriate weight may be obtained for the convolution kernel through learning. In addition, benefits directly brought by the weight sharing are that connections between layers of the convolutional neural network are reduced, while an overfitting risk is reduced.

(3) Loss function

In a process of training a deep neural network, because it is expected that an output of the deep neural network is as close as possible to a value that actually needs to be predicted, a current predicted value of the network and an actually expected target value may be compared, and then a weight vector of each layer of the neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible. The loss function may generally include mean square error, cross entropy, logarithm, and exponential loss functions. For example, an error mean square may be used as a loss function, and is defined as

$$mse = \frac{1}{N} \sum_{n=1}^{N} (y_n - \hat{y}_n)^2$$ . Specifically, a specific loss function may be selected based on an actual application scenario.

(4) Neural radiance field (Neural Radiance Fields, NeRF)

A scene expression is recorded in a deep neural network in an implicit expression manner, the deep neural network is used to implicitly learn a static three-dimensional scene, and indirectly complete tasks such as three-dimensional reconstruction of the scene and novel view synthesis (Novel View Synthesis).

(5) Three-dimensional Gaussian splatting (3D Gaussian Splatting, 3DGS)

Three-dimensional Gaussian splatting is a rasterization technology used to render a realistic scene. Three-dimensional Gaussian splatting uses 3D Gaussian distribution to describe a scene, and projects the distribution onto an image plane as 2D Gaussian distribution to render a view.

(6) Three-dimensional Gaussian body

The three-dimensional Gaussian body, also referred to as a Gaussian sphere, is used to describe Gaussian distribution in three-dimensional space. A shape of the Gaussian body is similar to a sphere, and a standard deviation of the Gaussian body determines a shape and a size of the Gaussian body. A larger standard deviation indicates a flatter shape of the Gaussian body, and a smaller standard deviation indicates a more compact shape of the Gaussian body.

(7) Rendering

In computer graphics, rendering usually refers to outputting visual information such as light, texture, and color of a three-dimensional model to a two-dimensional screen. In a rendering process, a graphics processing unit (GPU) is a main hardware device that performs rendering calculation. Main work of a GPU graphics rendering pipeline may be divided into two parts: converting 3D coordinates into 2D coordinates and converting 2D coordinates into actual colored pixels. The implementation may be divided into six phases, including a vertex shader, shape assembly, a geometry shader, rasterization, a fragment shader, and test and mixing. Rasterization is a process of converting data into visible pixels.

The following describes some possible system architectures provided in embodiments of the present disclosure.

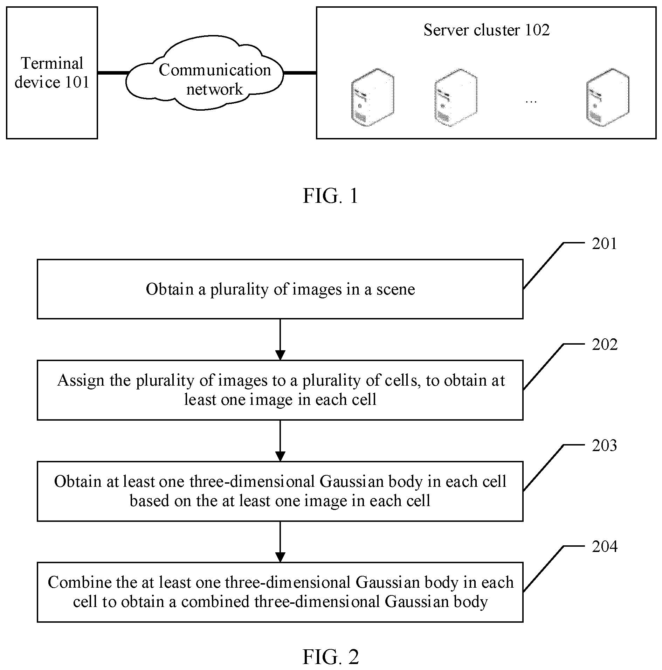

For example, as shown in FIG. 1, a terminal device 101 is connected to a server cluster 102 through a communication network. In this embodiment of the present disclosure, the terminal device 101 may capture an image, and send the captured image to the server cluster 102. The server cluster 102 performs the three-dimensional reconstruction method, the data processing method, and the rendering method provided in the present disclosure. The server cluster 102 outputs an obtained image to obtain a three-dimensional Gaussian body by using the three-dimensional reconstruction method, where the three-dimensional Gaussian body may further be optimized by using the data processing method to obtain an optimized three-dimensional Gaussian body, and the server cluster 102 sends, to the terminal device 101, a rendering result obtained by rendering the optimized three-dimensional Gaussian body by using the rendering method. Finally, the terminal device 101 displays the rendering result.

For example, in this embodiment of the present disclosure, the terminal device 101 may alternatively capture an image alone, convert the image into a three-dimensional Gaussian body by using the three-dimensional reconstruction method provided in the present disclosure, optimize a parameter of the three-dimensional Gaussian body to obtain an optimized three-dimensional Gaussian body, render the optimized three-dimensional Gaussian body by using the rendering method provided in the present disclosure, and display the rendering result.

The terminal device 101 may be a mobile phone, augmented reality (Augmented Reality, AR)/virtual reality (Virtual Reality, VR) glasses, a tablet computer, a laptop computer, a television, or the like. This is not specifically limited herein.

For large-scene reconstruction, an existing solution mainly uses an NeRF manner to reconstruct a large scene. However, the NeRF manner requires a large quantity of computing resources and time for training, and cannot balance rendering quality and a speed. In addition, although a 3DGS manner can construct a high-quality scene and implement real-time rendering, because a large quantity of three-dimensional Gaussian bodies participate in rendering in a large scene, a calculation amount is large, and the 3DGS manner cannot be applied to reconstruction of the large scene.

To resolve an existing problem, embodiments of the present disclosure provide a three-dimensional reconstruction method, a data processing method, a rendering method, and an apparatus, so that a large scene may be partitioned into a plurality of small scenes (which may also be referred to as cells), and scene reconstruction and real-time rendering are performed for the plurality of small scenes in the 3DGS manner, to finally implement high-quality large-scene reconstruction. The large scene may be usually an indoor scene cell of more than 1000 square meters, or a scene on which cell partitioning needs to be performed.

It should be understood that the present disclosure may be applied to not only reconstruction and rendering of a large scene, but also reconstruction and rendering of a small scene. For the small scene, the small scene may be first partitioned into a plurality of cells, and scene reconstruction is performed in each cell in the 3DGS manner. This is not specifically limited.

The following describes a method procedure provided in the present disclosure with reference to the foregoing system architecture.

It may be understood that the three-dimensional reconstruction method and the rendering method provided in the present disclosure may include a training phase and an inference phase. The training phase may be referred to as the three-dimensional reconstruction method, and the inference phase may be referred to as a process of the rendering method.

1. Training phase

In embodiments of the present disclosure, a scene may be partitioned into a plurality of cells, and then scene reconstruction is performed based on each cell by using a 3DGS method. The following describes a scene reconstruction process based on scene blocking.

FIG. 2 is a schematic flowchart of a three-dimensional reconstruction method according to the present disclosure. Details are as follows.

201: Obtain a plurality of images in a scene.

Generally, a scene in three-dimensional scene reconstruction is an environment in three-dimensional space, for example, a scene such as an indoor room, an outdoor building, or a natural environment. The scene may be partitioned into a plurality of cells, and scene reconstruction may be subsequently performed based on an image in each cell, to implement block-based scene reconstruction, thereby avoiding a case in which a memory is insufficient or reconstruction precision is poor due to an excessively large quantity of three-dimensional Gaussian bodies, and improving scene reconstruction quality.

The plurality of images in the scene may be obtained by photographing by a photographing device, or image extraction may be performed on a video captured by the photographing device, to obtain the plurality of images in the scene. This is not specifically limited herein.

202: Assign the plurality of images to the plurality of cells, to obtain at least one image in each cell.

Before the plurality of images are assigned, a pose corresponding to each image, that is, a pose of the photographing device in the scene, may be further obtained, so that the image may be subsequently assigned to a corresponding cell based on the pose of the image.

Optionally, the plurality of images may be assigned based on the pose of each image in the scene, so that at least one image is obtained in each cell in the scene, and each cell in the scene may be represented by at least one image.

Optionally, a projection area of each cell in each photographing device corresponding to each image may be determined based on the pose corresponding to each image. Due to visibility of the photographing device, a visibility angle of the photographing device may be fully used, and a photographing device whose projection area exceeds a preset value may be selected based on the projection area of each cell in each photographing device. Then, an image corresponding to the photographing device is assigned to a corresponding cell, to complete assignment of the plurality of images in the scene.

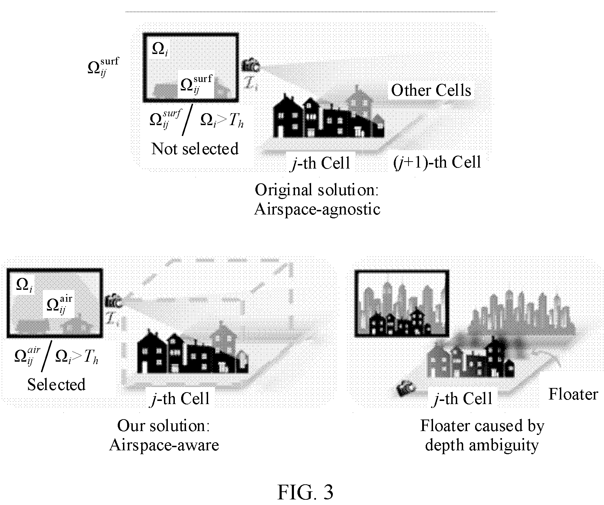

Specifically, a projection area of a bounding box of each cell on each photographing device may be used. The bounding box is a cube whose base is the area of the cell and whose height is infinite. As shown in FIG. 3, by fully considering a surface of the cell and an airspace region of the cell, a three-dimensional Gaussian body floating in the air can be deleted by photographing the airspace region of the cell, to suppress generation of a floater in the air, thereby improving quality of scene reconstruction.

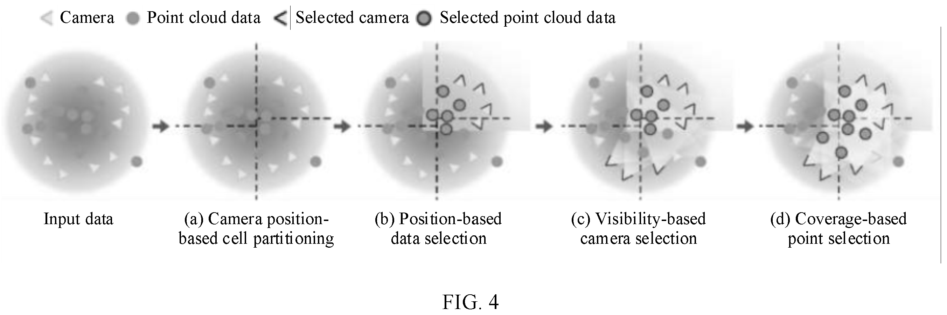

For example, the scene may be randomly partitioned into a plurality of cells, for example, four cells A, B, C, and D, or the scene may be evenly partitioned into a plurality of cells in a chessboard manner. This is not limited herein. As shown in (a) in FIG. 4, after the plurality of cells are obtained, generally, images in the cells are obtained simply based on photographing devices in the cells. For example, for a cell B, an image in the cell B may be obtained based on a photographing device in the cell B, as shown in (b) in FIG. 4. However, the photographing device has visibility, and a photographing device in a cell A, C, or D may also photograph the cell B. Therefore, a photographing device whose projection area is greater than a preset value may be selected based on a projection area of the cell B in each photographing device in the scene, as shown in (c) in FIG. 4. An image corresponding to the selected photographing device is assigned to the cell B, as shown in (d) in FIG. 4.

In this embodiment of the present disclosure, visibility of the photographing device may be fully used to assign the plurality of images in the scene to corresponding cells, and a surface and an airspace region of an object are fully considered, to suppress generation of a floater in the air, thereby improving quality of scene reconstruction.

203: Obtain at least one three-dimensional Gaussian body in each cell based on the at least one image in each cell.

Generally, the three-dimensional Gaussian body may be used to represent the scene, and the three-dimensional Gaussian body is a minimum element in 3DGS scene representation. Therefore, a three-dimensional Gaussian body in each cell may be obtained based on the image in each cell, to represent a constructed scene.

Specifically, the obtained image in the scene may be analyzed by using a structure from motion (structure from motion, SFM) algorithm, to obtain point cloud data corresponding to the image; and a corresponding three-dimensional Gaussian body is obtained by using a created three-dimensional Gaussian function.

204: Combine the at least one three-dimensional Gaussian body in each cell to obtain a combined three-dimensional Gaussian body.

After the three-dimensional Gaussian body in each cell is obtained, three-dimensional Gaussian bodies in all cells may be combined, to obtain a plurality of combined three-dimensional Gaussian bodies, and the plurality of combined three-dimensional Gaussian bodies may be used to represent the scene, to implement scene reconstruction.

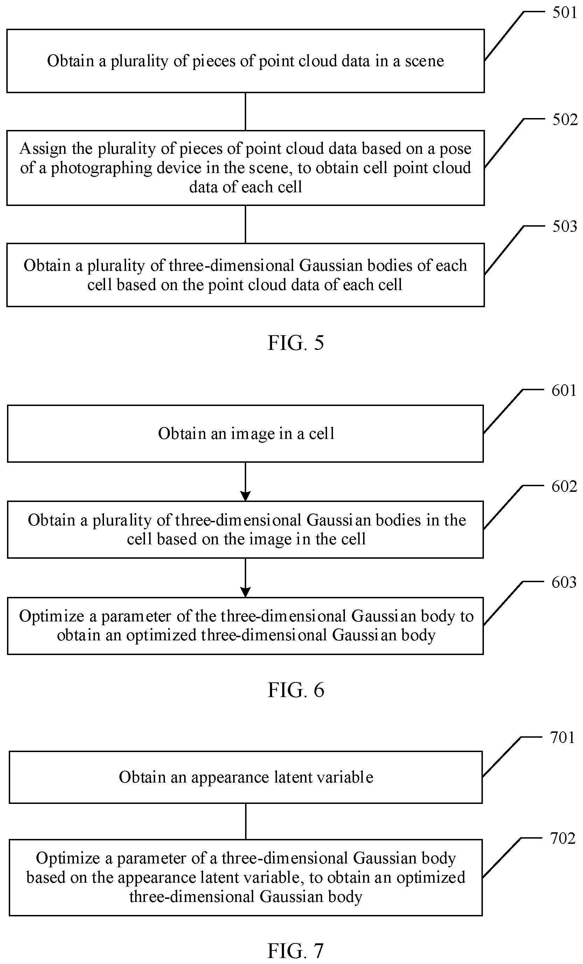

FIG. 5 is a schematic flowchart of another three-dimensional reconstruction method according to the present disclosure. Details are as follows.

501: Obtain a plurality of pieces of point cloud data in a scene.

The point cloud data may be calculated based on a plurality of images in the scene by using an SFM algorithm, may be captured by using a depth camera, or may be captured by using an inertial sensor. This is not specifically limited herein.

502: Assign the plurality of pieces of point cloud data based on a pose of a photographing device in the scene, to obtain cell point cloud data of each cell.

Before the plurality of pieces of point cloud data in the scene are classified, the pose of the photographing device in the scene may be further obtained. The pose may be obtained by calculating an image in the scene by using the SFM algorithm, may be captured by using the depth camera, or may be captured by using the inertial sensor. This is not specifically limited herein. In addition, the pose of the photographing device in the scene corresponds to a pose of the image corresponding to the photographing device.

After the pose of the photographing device is obtained, the plurality of pieces of point cloud data in the scene may be assigned based on the pose of the photographing device, so that each cell in the scene includes at least one piece of point cloud data.

Specifically, a point cloud ratio of a quantity of cell point clouds of each cell observed by the photographing device to a quantity of all point cloud data that can be observed by the photographing device may be determined based on the pose of the photographing device. When the point cloud ratio exceeds a preset value, the photographing device corresponding to each cell is determined. Then, the point cloud data corresponding to each cell may be obtained based on the photographing device of each cell.

503: Obtain a plurality of three-dimensional Gaussian bodies of each cell based on the point cloud data of each cell.

After the point cloud data of each cell is obtained, Gaussian distribution may be created based on the point cloud data, to obtain the plurality of three-dimensional Gaussian bodies of each cell, where the plurality of three-dimensional Gaussian bodies are used to represent each cell. After the three-dimensional Gaussian bodies in each cell are obtained, the three-dimensional Gaussian bodies in each cell may be combined to obtain a combined three-dimensional Gaussian body, where the combined three-dimensional Gaussian body may represent the scene.

The following describes an optimization process of scene reconstruction for one cell in the scene.

FIG. 6 is a schematic flowchart of a three-dimensional reconstruction method according to the present disclosure. Details are as follows.

601: Obtain an image in a cell.

The cell may be any one of a plurality of cells in the scene. The image in the cell may be obtained by photographing by the photographing device, or image extraction may be performed on a video captured by the photographing device, to obtain the plurality of images in the scene. This is not specifically limited herein.

602: Obtain, based on the image in the cell, a plurality of three-dimensional Gaussian bodies in the cell.

After the image in the cell is obtained, point cloud data of the image may be obtained by using an SFM algorithm, and Gaussian distribution is created based on the point cloud data, to obtain the plurality of three-dimensional Gaussian bodies in the cell. The three-dimensional Gaussian bodies are used to preliminarily represent the cell, and the three-dimensional Gaussian bodies may be optimized subsequently, to obtain a higher-quality cell.

603: Optimize a parameter of the three-dimensional Gaussian body to obtain an optimized three-dimensional Gaussian body.

Generally, because exposure changes of different images are different, artifacts are generated after scene reconstruction. To resolve the current problem, exposure changes of different images may be stripped, to reduce an artifact problem caused by exposure change and improve rendering quality.

Specifically, the parameter of the three-dimensional Gaussian body may be optimized by comparing and analyzing a difference between a first rendered image and a sample image and a difference between a second rendered image and the sample image, to obtain the optimized three-dimensional Gaussian body. The optimized three-dimensional Gaussian body is rendered to obtain the cell. A rendered image in each cell is combined to obtain the scene, so that appearance brightness of the scene is consistent. The second rendered image may be obtained by analyzing the first rendered image, and the first rendered image may be obtained by rendering the obtained three-dimensional Gaussian body.

Optionally, after the first rendered image is obtained, analysis may be performed on the first rendered image with reference to an appearance latent variable by using a convolutional neural network, to obtain the second rendered image, where the appearance latent variable is used to identify the first rendered image. Then, the parameter of the three-dimensional Gaussian body may be optimized by comparing and analyzing the difference between the first rendered image and the sample image and the difference between the second rendered image and the sample image, to obtain the optimized three-dimensional Gaussian body.

Optionally, the first rendered image and the appearance latent variable may be further analyzed by using the convolutional neural network, to obtain the second rendered image. The parameter of the three-dimensional Gaussian body is optimized based on the difference between the second rendered image and the sample image, to obtain the optimized three-dimensional Gaussian body.

The first rendered image may be further down-sampled to obtain a temporary rendered image, and the temporary rendered image and the appearance latent variable are analyzed by using the convolutional neural network, to obtain the second rendered image.

Optionally, in addition to analyzing the first rendered image and the appearance latent variable by using the neural network model to obtain the second rendered image, the appearance latent variable may be further used to analyze a parameter used to express a color in the three-dimensional Gaussian body, to obtain the second rendered image, or analysis may be performed with reference to the appearance latent variable in another manner, to obtain the second rendered image. This is not limited herein.

Optionally, a first loss function between the first rendered image and the sample image and a second loss function between the second rendered image and the sample image may be calculated. Both the first loss function and the second loss function may satisfy a formula $L = (1 - \lambda)L_1 + \lambda L_{D-SSIM}$, where the loss $L_1$ usually refers to an average absolute error loss, $L_{D-SSIM}$ is a structural similarity loss between the first rendered image or the second rendered image and the sample image, and $\lambda$ is a weight. Then, the parameter of the three-dimensional Gaussian body may be optimized based on the first loss function and the second loss function until a preset condition is met, to obtain the optimized three-dimensional Gaussian body. The optimized three-dimensional Gaussian body is used to represent the cell.

Optionally, the second loss function between the second rendered image and the sample image may be calculated, and the second loss function satisfies the foregoing formula $L = (1 - \lambda)L_1 + \lambda L_{D\text{-}SSIM}$. Then, the parameter of the three-dimensional Gaussian body is optimized based on the second loss function until the preset condition is met, to obtain the optimized three-dimensional Gaussian body.

The parameter of the three-dimensional Gaussian body includes a center (position) $\mu$, opacity $\alpha$, a three-dimensional covariance matrix $\Sigma$, and a color $c$. One or more of $\mu$, $\alpha$, $\Sigma$, or $c$ in the parameters are adjusted, so that brightness of images rendered based on the optimized three-dimensional Gaussian body is consistent. The color $c$ may be represented by using a spherical harmonic function or an RGB value, to present a viewing angle-dependent appearance. All parameters of the three-dimensional Gaussian body can be learned, and can be optimized through back propagation. Therefore, the parameter of the three-dimensional Gaussian body may be updated based on the first loss function and the second loss function.

Optionally, a fully connected network may be further constructed to analyze the pose of the photographing device, to obtain an appearance-related parameter. The appearance-related parameter may be used to adjust an exposure parameter of the image rendered based on the three-dimensional Gaussian body. The appearance-related parameter may include an exposure change parameter, a color parameter, or another appearance-related parameter. This is not specifically limited herein. The parameter of the three-dimensional Gaussian body is optimized based on the appearance-related parameter.

Optionally, the appearance-related parameter may be obtained based on the appearance latent variable. Then, the parameter of the three-dimensional Gaussian body is optimized based on the appearance-related parameter. The appearance latent variable may be used to identify the image rendered based on the three-dimensional Gaussian body. Because the three-dimensional Gaussian body corresponds to an image photographed by the photographing device, the appearance latent variable may also be used to identify the image corresponding to the photographing device. The appearance-related parameter may be used to adjust an exposure parameter of the image rendered based on the three-dimensional Gaussian body. Therefore, the appearance-related parameter may be further obtained based on the appearance latent variable, and the image corresponding to the photographing device is determined based on the appearance latent variable, so that the appearance-related parameter may be determined based on the image.

Specifically, one or more of $\mu$, $a$, $\Sigma$, or $c$ in the parameters of the three-dimensional Gaussian body may be directly adjusted based on a value of the obtained appearance-related parameter, so that appearances of the optimized three-dimensional Gaussian body after rendering are consistent. If the appearance-related parameter is an exposure change parameter in this case, brightness of the optimized three-dimensional Gaussian body after rendering may be consistent.

The appearance-related parameter may be a global parameter or a pixel-by-pixel parameter. When the appearance-related parameter is the global parameter, the appearance of the image may be adjusted frame by frame based on the appearance-related parameter. When the appearance-related parameter is the pixel-by-pixel parameter, the appearance of the image may be adjusted pixel by pixel based on the appearance-related parameter.

In this embodiment of the present disclosure, a loss function between the second rendered image and the sample image may be further considered, to optimize the parameter of the three-dimensional Gaussian body. The second rendered image may be an image obtained by performing adjustment based on the rendered image and the feature parameter. Appearance parameters of the second rendered image are consistent. Therefore, the parameter of the three-dimensional Gaussian body may be optimized by comparing and analyzing a loss between the second rendered image and the sample image, so that the appearances of the optimized three-dimensional Gaussian body are consistent, thereby reducing generation of artifacts and improving rendering quality.

FIG. 7 is a schematic flowchart of a data processing method according to the present disclosure. Details are as follows.

701: Obtain an appearance latent variable.

The appearance latent variable may be used to identify a rendered image, and the rendered image is obtained by rendering a three-dimensional Gaussian body in a cell. In addition, the appearance latent variable corresponds to a photographing device in the cell, and the appearance latent variable may include an ID of the photographing device. In addition, because a first rendered image corresponds to the three-dimensional Gaussian body obtained based on an image corresponding to the photographing device, the appearance latent variable may be further used to identify the image corresponding to the photographing device.

702: Optimize a parameter of the three-dimensional Gaussian body based on the appearance latent variable, to obtain an optimized three-dimensional Gaussian body.

In this embodiment of the present disclosure, because the appearance latent variable corresponds to the photographing device, and may identify the image corresponding to the photographing device, an appearance-related parameter may be determined based on the appearance latent variable, and then the parameter of the three-dimensional Gaussian body may be optimized based on the appearance-related parameter.

Optionally, the appearance-related parameter may be determined based on the obtained appearance latent variable, where the appearance-related parameter is used to adjust an appearance parameter of a rendered image of the three-dimensional Gaussian body. Then, the parameter of the three-dimensional Gaussian body may be optimized based on the appearance-related parameter, so that brightness of images rendered based on the optimized three-dimensional Gaussian body is consistent.

Optionally, the three-dimensional Gaussian body in the cell may be rendered to obtain the first rendered image. Then, the first rendered image and the appearance latent variable may be analyzed by using a neural network model, to obtain a second rendered image. It should be understood that, optionally, a parameter that is in the three-dimensional Gaussian body and that is used to express a color may be further analyzed based on the appearance latent variable, to obtain the second rendered image, or the second rendered image is obtained through analysis with reference to the appearance latent variable in another manner. This is not limited herein. After the first rendered image and the second rendered image are obtained, the parameter of the three-dimensional Gaussian body may be optimized by comparing and analyzing a difference between the first rendered image and a sample image and a difference between the second rendered image and the sample image, to obtain the optimized three-dimensional Gaussian body. A specific process of rendering the parameter of the three-dimensional Gaussian body based on the rendered image and the appearance latent variable is similar to the content described in step 603 in FIG. 6, and details are not described herein again.

Optionally, based on the first rendered image obtained through rendering, the first rendered image and the appearance latent variable may be analyzed by using the neural network model, to obtain the second rendered image. Alternatively, the appearance latent variable may be used to analyze a parameter that is in the three-dimensional Gaussian body and that is used to express a color, to obtain the second rendered image. Alternatively, the second rendered image is obtained through analysis with reference to the appearance latent variable in another manner. This is not limited herein. Then, the parameter of the three-dimensional Gaussian body is optimized based on the difference between the second rendered image and the sample image, to obtain the optimized three-dimensional Gaussian body.

2. Inference phase

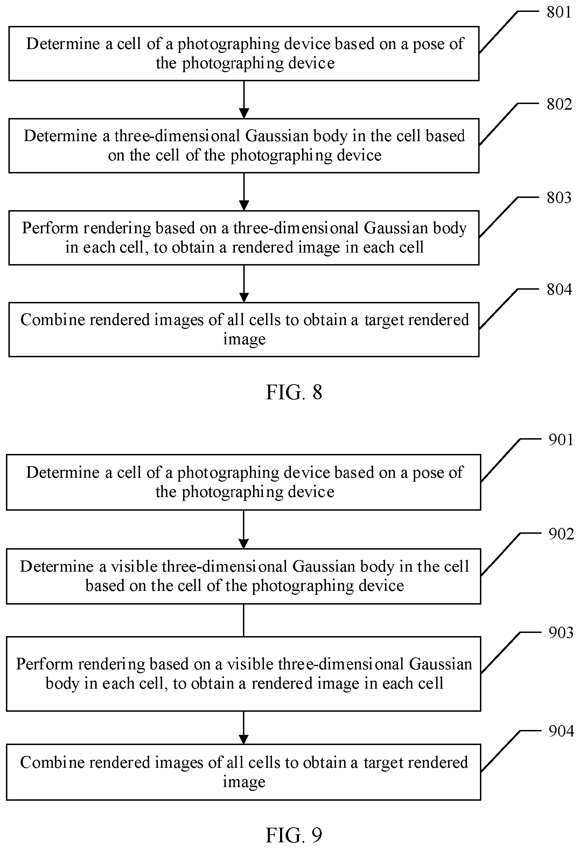

FIG. 8 is a schematic flowchart of a rendering method according to an embodiment of the present disclosure. Details are as follows.

801: Determine a cell of a photographing device based on a pose of the photographing device.

The pose of the photographing device may be obtained from another device, or may be obtained through calculation by using an SFM algorithm based on a photographed image of the photographing device. This is not specifically limited herein.

After the pose of the photographing device is obtained, a cell to which the photographing device belongs may be determined based on pose information of the photographing device. It should be understood that the cell may be obtained by assigning a large scene, or may be obtained by assigning a small scene. This is not specifically limited herein. After a scene cell to which the photographing device belongs is determined, block rendering may be performed subsequently based on different scene cells.

802: Determine a three-dimensional Gaussian body in the cell based on the cell of the photographing device.

An image of the cell may be obtained, point cloud data of the cell may be obtained by using the SFM algorithm, and Gaussian mapping is performed on the point cloud data, to obtain the three-dimensional Gaussian body in the cell. The image of the cell may be obtained by performing image photographing by the photographing device, or may be obtained by performing image extraction based on a video obtained by the photographing device. This is not specifically limited herein.

803: Perform rendering based on the three-dimensional Gaussian body in each cell, to obtain a rendered image in each cell.

After the three-dimensional Gaussian body in each cell is obtained, the cells may be partitioned and processed in parallel, to obtain the rendered image in each cell.

Specifically, the three-dimensional Gaussian body in the cell may be segmented by using a renderer, to obtain a small triangle fragment, so that different tile (cell) sizes or screen resolutions of a terminal device can be better adapted. The tile is a cell on a screen of the terminal device, and may be one pixel or a combination of a plurality of pixels. Then, each triangle fragment is mapped to a corresponding tile on the screen. After being mapped to the tile, a location, a depth value, and the like of each triangle fragment on the screen may be calculated in a tile-based rasterizer (tile-based rasterizer) manner, and each small triangle fragment is converted into a pixel on the screen. In a rasterization process, a depth test is performed, and whether to draw the pixel is determined by comparing the depth value of the triangle fragment with the depth value of the corresponding pixel, to ensure that the blocking relationship is correctly processed and improve correctness of a rendering result. Finally, a color value of each pixel is calculated based on an attribute (for example, a color or a texture) of the triangle fragment, to implement rendering based on the three-dimensional Gaussian body to obtain the rendered image in each cell.

804: Combine rendered images of all cells to obtain a target rendered image.

After the rendered image in each cell is obtained, each rendered image may be combined, to obtain the target rendered image, where the target rendered image may be used to represent the target scene. It should be understood that, in this embodiment of the present disclosure, after the three-dimensional Gaussian body in the cell is rendered based on the pose of the photographing device to obtain the rendered image, the rendered image in each cell may not be combined, and the three-dimensional Gaussian body in the currently visible cell may be rendered simply based on the pose of the photographing device, to obtain the current rendered image.

In this embodiment of the present disclosure, the plurality of cells obtained through scene-based partitioning may be rendered by using a cell block partitioning policy, so that a quantity of three-dimensional Gaussian bodies that are rendered each time is reduced, thereby improving a rendering speed, and implementing real-time rendering.

FIG. 9 is a schematic flowchart of another rendering method according to an embodiment of the present disclosure. Details are as follows.

901: Determine a cell of a photographing device based on a pose of the photographing device.

In this embodiment of the present disclosure, step 901 is similar to step 801 in FIG. 8. Details are not described herein again.

902: Determine a visible three-dimensional Gaussian body in the cell based on the cell of the photographing device.

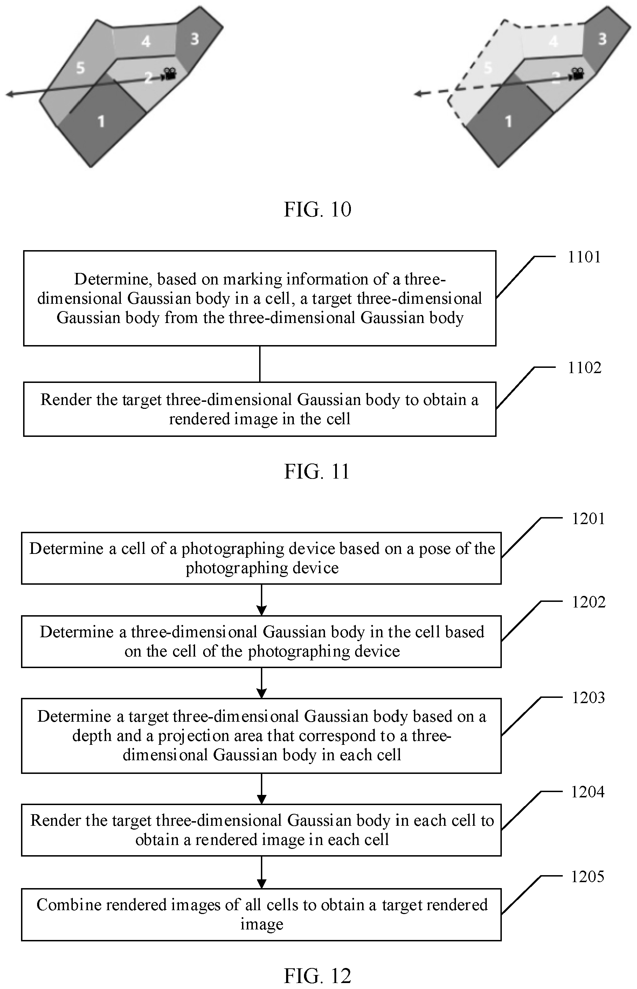

After the scene is partitioned to obtain a plurality of cells, the visible three-dimensional Gaussian body in the cell may be determined based on marking information of the three-dimensional Gaussian body in the cell. As shown in FIG. 10, for an indoor scene cell, because a wall may exist, for a photographing device shown in FIG. 10, in a cell numbered 5, a three-dimensional Gaussian body in the cell is invisible to the photographing device due to blocking by the wall.

The marking information includes whether the three-dimensional Gaussian body is visible in the current cell. Therefore, an invisible three-dimensional Gaussian body in the cell may be deleted based on the marking information of the three-dimensional Gaussian body, to obtain the visible three-dimensional Gaussian body in the cell. It may be understood that, in this embodiment of the present disclosure, that the invisible three-dimensional Gaussian body in the cell is deleted indicates that when the three-dimensional Gaussian body in the cell is rendered, the invisible three-dimensional Gaussian body in the cell is excluded, and the invisible three-dimensional Gaussian body in the cell is not rendered. This does not mean that the invisible three-dimensional Gaussian body in the cell does not exist. The invisible three-dimensional Gaussian body in the cell may be visible to another cell, and may be rendered to obtain a rendered image of the another cell.

903: Perform rendering based on a visible three-dimensional Gaussian body in each cell, to obtain a rendered image in each cell.

After the visible three-dimensional Gaussian body in each cell is obtained, the rendering method described in step 803 in FIG. 8 may be used to project the visible three-dimensional Gaussian body to two-dimensional image space for rendering, to obtain the rendered image in each cell.

904: Combine rendered images of all cells to obtain a target rendered image.

In this embodiment of the present disclosure, step 904 is similar to step 804 in FIG. 8. Details are not described herein again. It should be understood that, in this embodiment of the present disclosure, rendering may be performed based on the visible three-dimensional Gaussian body in the cell, to obtain a rendered image in a current viewing angle of the photographing device, and the rendered image of each cell may not be combined.

In this embodiment of the present disclosure, simply the visible three-dimensional Gaussian body in the cell may be rendered, so that a quantity of three-dimensional Gaussian bodies to be rendered is reduced, thereby improving a rendering speed. In addition, because the invisible three-dimensional Gaussian body in the cell is deleted, storage space is reduced.

FIG. 11 is a schematic flowchart of another rendering method according to an embodiment of the present disclosure. Details are as follows.

1101: Determine, based on marking information of a three-dimensional Gaussian body in a cell, a target three-dimensional Gaussian body from the three-dimensional Gaussian body.

Generally, when rendering is performed on a cell corresponding to a photographing device based on a pose of the photographing device, rendering is performed on all obtained three-dimensional Gaussian bodies. However, not all the three-dimensional Gaussian bodies are visible in the cell. To improve rendering efficiency, a target three-dimensional Gaussian body may be determined from the three-dimensional Gaussian bodies based on marking information of the three-dimensional Gaussian bodies. The target three-dimensional Gaussian body is a three-dimensional Gaussian body identified by the photographing device in the cell, that is, a visible three-dimensional Gaussian body in the cell. Therefore, simply the visible three-dimensional Gaussian body in the cell may be rendered, thereby reducing a quantity of rendered three-dimensional Gaussian bodies, and improving rendering efficiency.

Specifically, the visible three-dimensional Gaussian body in the cell may be used as the target three-dimensional Gaussian body based on the marking information of the three-dimensional Gaussian body. The marking information includes information about whether the three-dimensional Gaussian body is visible in a current cell.

1102: Render the target three-dimensional Gaussian body to obtain the rendered image in the cell.

After the target three-dimensional Gaussian body in the cell is obtained, simply the target three-dimensional Gaussian body may be rendered. When the photographing device switches a pose, the three-dimensional Gaussian body corresponding to the cell may be loaded based on the cell corresponding to the current pose of the photographing device, to implement dynamic rendering based on cell visibility.

In this embodiment of the present disclosure, the rendered image may be obtained by rendering the target three-dimensional Gaussian body by using the rendering method described in step 803 in FIG. 8, and the target three-dimensional Gaussian body is projected into two-dimensional image space for rendering, to obtain the rendered image in the cell.

FIG. 12 is a schematic flowchart of another rendering method according to an embodiment of the present disclosure. Details are as follows.

1201: Determine a cell of a photographing device based on a pose of the photographing device.

1202: Determine a three-dimensional Gaussian body in the cell based on the cell of the photographing device.

In this embodiment of the present disclosure, step 1201 and step 1202 are similar to step 801 and step 802 in FIG. 8. Details are not described herein again.

1203: Determine a target three-dimensional Gaussian body based on a depth and a projection area that correspond to a three-dimensional Gaussian body in each cell.

After the three-dimensional Gaussian body in the cell is obtained, the three-dimensional Gaussian body may be screened based on the depth and the projection area of the three-dimensional Gaussian body, to obtain the target three-dimensional Gaussian body.

Optionally, a depth of the three-dimensional Gaussian body from a photographing device may be calculated, and a to-be-deleted three-dimensional Gaussian body is determined from the three-dimensional Gaussian body based on the depth, or a to-be-rendered three-dimensional Gaussian body is determined from the three-dimensional Gaussian body in the cell based on the depth. Alternatively, a first preset threshold of the projection area of the three-dimensional Gaussian body may be determined based on the depth. Based on the first preset threshold, a three-dimensional Gaussian body whose projection area is less than the first preset threshold in the to-be-deleted three-dimensional Gaussian body is deleted, to obtain the target three-dimensional Gaussian body, or a three-dimensional Gaussian body whose projection area is greater than or equal to the first preset threshold in the to-be-rendered three-dimensional Gaussian body is used as the target three-dimensional Gaussian body.

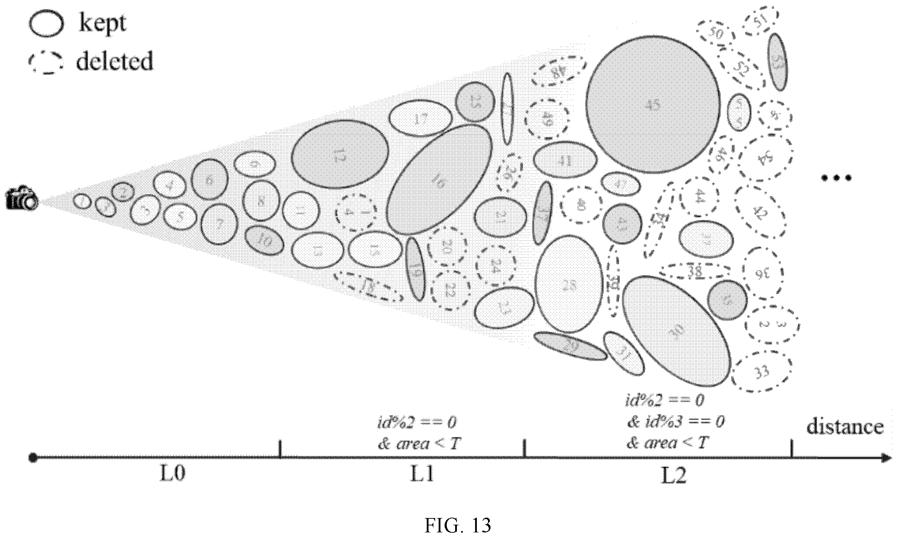

For example, as shown in FIG. 13, the depth may be divided into a plurality of segments L0, L1, L2, ..., and Ln based on the depth of the three-dimensional Gaussian body. In the L1 segment, based on an index number of the three-dimensional Gaussian body in the depth range, a three-dimensional Gaussian body whose index number is a multiple of 2 may be used as a to-be-deleted three-dimensional Gaussian body, and a three-dimensional Gaussian body whose projection area is less than the first preset threshold is selected from the to-be-deleted three-dimensional Gaussian body and deleted. In the L2 segment, a three-dimensional Gaussian body whose index number is 2 or a multiple of 3 may be used as a to-be-deleted three-dimensional Gaussian body, and a three-dimensional Gaussian body whose projection area is less than the first preset threshold is selected from the to-be-deleted three-dimensional Gaussian body and deleted. It should be understood that, in this embodiment of the present disclosure, three-dimensional Gaussian bodies that meet the preset condition and that are in different depth ranges may be deleted simply based on the depths of the three-dimensional Gaussian bodies. For example, a three-dimensional Gaussian body whose index number is a multiple of 2 in the L1 segment may be deleted, and a three-dimensional Gaussian body whose index number is a multiple of 2 or 3 in the L2 segment may be deleted, to obtain the target three-dimensional Gaussian bodies. In addition, the three-dimensional Gaussian body whose projection area is less than the preset threshold may be deleted simply based on the preset threshold, to obtain the target three-dimensional Gaussian body.

Optionally, a preset quantity of three-dimensional Gaussian bodies may be randomly deleted to obtain the target three-dimensional Gaussian body, or a preset quantity of three-dimensional Gaussian bodies may be randomly used as the target three-dimensional Gaussian body. For example, half of the three-dimensional Gaussian bodies in the L1 segment are deleted, or half of the three-dimensional Gaussian bodies in the L1 segment are used as the target three-dimensional Gaussian body.

Optionally, volumes of all three-dimensional Gaussian bodies in the scene may be calculated in advance, and three-dimensional Gaussian bodies whose volumes exceed a second preset threshold are deleted to obtain the target three-dimensional Gaussian body, or three-dimensional Gaussian bodies whose volumes are less than or equal to the second preset threshold are used as the target three-dimensional Gaussian body.

Optionally, the to-be-deleted three-dimensional Gaussian body may be randomly determined, and then a three-dimensional Gaussian body whose volume exceeds the third preset threshold in the to-be-deleted three-dimensional Gaussian body is deleted to obtain the target three-dimensional Gaussian body. Alternatively, the to-be-rendered three-dimensional Gaussian body may be randomly determined, and then a three-dimensional Gaussian body whose volume is less than or equal to the third preset threshold in the to-be-rendered three-dimensional Gaussian body is used as the target three-dimensional Gaussian body.

In this embodiment of the present disclosure, the three-dimensional Gaussian body that meets the preset condition is deleted, to obtain the target three-dimensional Gaussian body by screening from the three-dimensional Gaussian body in the cell, so that subsequent rendering may be performed simply on the target three-dimensional Gaussian body, thereby improving rendering efficiency.

1204: Render the target three-dimensional Gaussian body in each cell to obtain a rendered image in each cell.

After the target three-dimensional Gaussian body is obtained, the rendering method described in step 803 in FIG. 8 may be used to project the target three-dimensional Gaussian body in each cell to two-dimensional image space for rendering, to obtain the rendered image in each cell.

1205: Combine rendered images of all cells to obtain a target rendered image.

In this embodiment of the present disclosure, step 1205 is similar to step 904 in FIG. 9. Details are not described herein again.

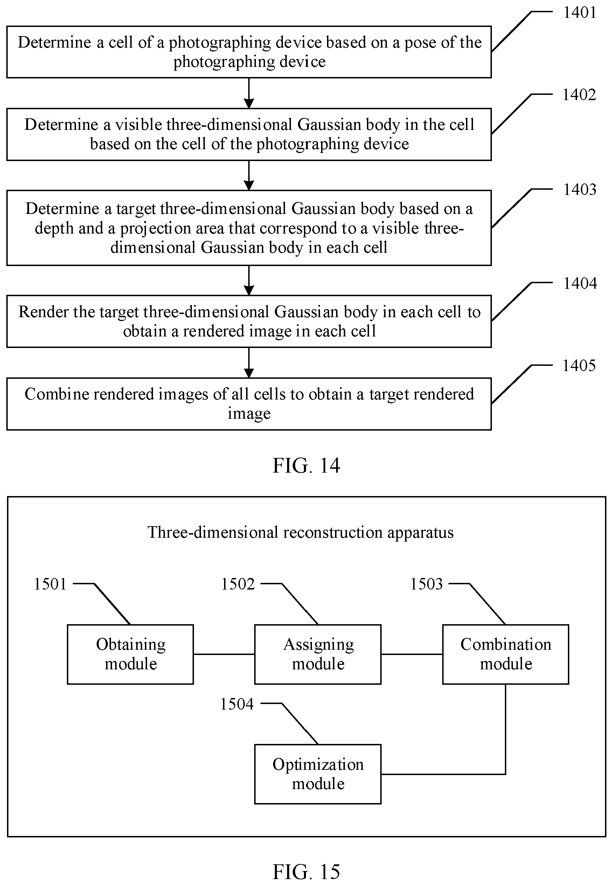

FIG. 14 is a schematic flowchart of another rendering method according to an embodiment of the present disclosure. Details are as follows.

1401: Determine a cell of a photographing device based on a pose of the photographing device.

1402: Determine a visible three-dimensional Gaussian body in the cell based on the cell of the photographing device.

In this embodiment of the present disclosure, step 1401 and step 1402 are similar to step 901 and step 902 in FIG. 9. Details are not described herein again.

1403: Determine a target three-dimensional Gaussian body based on a depth and a projection area that correspond to a visible three-dimensional Gaussian body in each cell.

After the visible three-dimensional Gaussian body in each cell is obtained, the target three-dimensional Gaussian body may be determined based on the depth and the projection area that correspond to the visible three-dimensional Gaussian body in the manner of determining the target three-dimensional Gaussian body in step 1203 in FIG. 12. A specific implementation is similar, and details are not described herein again.

1404: Render the target three-dimensional Gaussian body in each cell to obtain a rendered image in each cell.

1405: Combine rendered images of all cells to obtain a target rendered image.

In this embodiment of the present disclosure, step 1404 and step 1405 are similar to step 1204 and step 1205 in FIG. 12. Details are not described herein again. Similarly, the rendered image in each cell may not be combined, and the cell in a current viewing angle may be rendered simply based on the pose of the photographing device.

The foregoing describes the method procedure provided in the present disclosure. The following describes the apparatus provided in the present disclosure based on the foregoing method procedure.

FIG. 15 is a diagram of a structure of a three-dimensional reconstruction apparatus according to the present disclosure. The apparatus includes:

an obtaining module 1501, configured to obtain a plurality of images for a scene, where the scene includes a plurality of cells;

a assigning module 1502, configured to assign the plurality of images to the plurality of cells based on poses of photographing devices corresponding to the plurality of images, to obtain at least one image in each cell;

the obtaining module 1501 is further configured to obtain at least one three-dimensional Gaussian body in each cell based on the at least one image in each cell, where the at least one three-dimensional Gaussian body is used to represent the cell in the scene; and

a combination module 1503, configured to combine the at least one three-dimensional Gaussian body in each cell to obtain a combined three-dimensional Gaussian body, where the combined three-dimensional Gaussian body represents the scene.

In a possible implementation, the assigning module 1502 is specifically configured to: determine, based on the pose of the photographing device corresponding to each image, projection information of each cell in the photographing device corresponding to each image, where the projection information includes a projection area of each cell in the photographing device; and assign each image to a corresponding cell in the plurality of cells based on the projection information of each cell in the photographing device corresponding to each image, to obtain the at least one image in each cell.

In a possible implementation, the apparatus may further include:

the obtaining module 1501, further configured to obtain a plurality of pieces of point cloud data corresponding to each image; and

the assigning module 1502, further configured to: assign the plurality of pieces of point cloud data based on a pose corresponding to each image, to obtain a cell point cloud of each cell, where the cell point cloud includes at least one piece of point cloud data, and the cell point cloud of each cell is used to obtain the three-dimensional Gaussian body in each cell.

In a possible implementation, the assigning module 1502 is specifically configured to: determine, based on the pose corresponding to each image, a point cloud ratio of a photographing device corresponding to each image, where the point cloud ratio is a ratio of a quantity of point clouds of each cell observed by the photographing device to a quantity of total point cloud data observed by the photographing device; and assign the plurality of pieces of point cloud data to corresponding cells in the plurality of cells based on the point cloud ratio of the photographing device corresponding to each image.

In a possible implementation, the assigning module 1502 is specifically configured to: determine a photographing device in each cell based on the point cloud ratio of the photographing device corresponding to each image; and assign the plurality of pieces of point cloud data to corresponding cells in the plurality of cells based on the photographing device in each cell, to obtain at least one piece of point cloud data of each cell.

In a possible implementation, the apparatus may further include:
an optimization module 1504, configured to optimize a parameter of the three-dimensional Gaussian body to obtain an optimized three-dimensional Gaussian body, where the parameter is used to adjust an appearance parameter of the three-dimensional Gaussian body after rendering.

In a possible implementation, the optimization module 1504 is specifically configured to: render the three-dimensional Gaussian body to obtain a first rendered image; analyze the first rendered image and an appearance latent variable by using a neural network model, to obtain a second rendered image, where the appearance latent variable is used to identify the first rendered image; and optimize the parameter of the three-dimensional Gaussian body based on a difference between the first rendered image and a sample image and a difference between the second rendered image and the sample image, to obtain the optimized three-dimensional Gaussian body.

In a possible implementation, the optimization module 1504 is specifically configured to: perform down-sampling on the first rendered image to obtain a temporary rendered image; and analyze the temporary rendered image and the appearance latent variable by using the neural network model, to obtain the second rendered image.

In a possible implementation, the optimization module 1504 is specifically configured to: calculate a first loss function between the first rendered image and the sample image; calculate a second loss function between the second rendered image and the sample image; and optimize the parameter of the three-dimensional Gaussian body based on the first loss function and the second loss function, to obtain the optimized three-dimensional Gaussian body.

In a possible implementation, the optimization module 1504 is specifically configured to: perform analysis by using a fully connected network based on the pose, to obtain an appearance-related parameter, where the appearance-related parameter is used to adjust an appearance parameter of a rendered image of the three-dimensional Gaussian body; and optimize the parameter of the three-dimensional Gaussian body based on the appearance-related parameter.

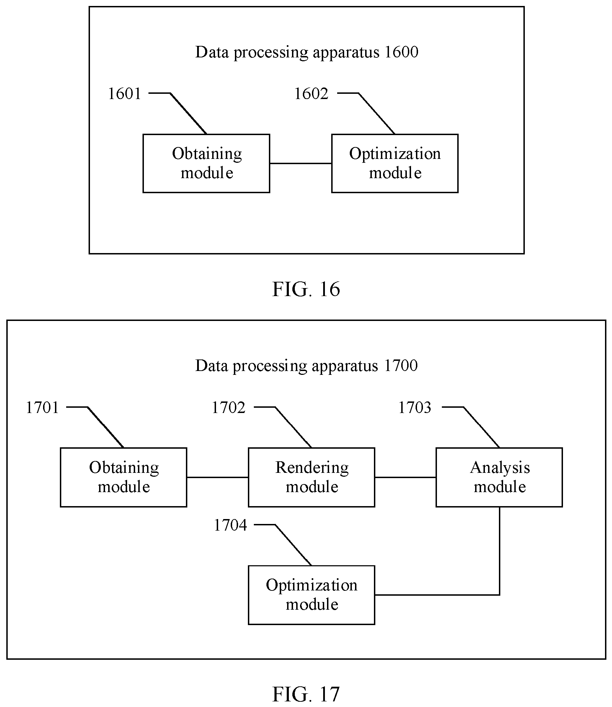

FIG. 16 is a diagram of a structure of a data processing apparatus 1600 according to the present disclosure. The data processing apparatus 1600 includes:

an obtaining module 1601, configured to obtain an appearance latent variable, where the appearance latent variable is used to identify a rendered image obtained by rendering a three-dimensional Gaussian body in a cell; and
an optimization module 1602, configured to optimize a parameter of the three-dimensional Gaussian body based on the appearance latent variable, to obtain an optimized three-dimensional Gaussian body, where the optimized three-dimensional Gaussian body is used to represent the cell.

In a possible implementation, the foregoing optimization module 1602 is specifically configured to: render the three-dimensional Gaussian body in the cell to obtain a first rendered image; analyze the first rendered image and the appearance latent variable to obtain a second rendered image; and optimize the parameter of the three-dimensional Gaussian body based on a difference between the first rendered image and a sample image and a difference between the second rendered image and the sample image, to obtain the optimized three-dimensional Gaussian body.

In a possible implementation, the foregoing optimization module 1602 is specifically configured to: render the three-dimensional Gaussian body in the cell to obtain a first rendered image; analyze the first rendered image and the appearance latent variable to obtain a second rendered image; and optimize the parameter of the three-dimensional Gaussian body based on the difference between the second rendered image and the sample image, to obtain the optimized three-dimensional Gaussian body.

In a possible implementation, the foregoing optimization module 1602 is specifically configured to: perform down-sampling on the first rendered image to obtain a temporary rendered image; and analyze the temporary rendered image and a feature parameter by using a neural network model, to obtain the second rendered image.

In a possible implementation, the foregoing optimization module 1602 is specifically configured to: calculate a first loss function between the first rendered image and the sample image; calculate a second loss function between the second rendered image and the sample image; and optimize the parameter of the three-dimensional Gaussian body based on the first loss function and the second loss function, to obtain the optimized three-dimensional Gaussian body.

In a possible implementation, the foregoing optimization module 1602 is specifically configured to: calculate a second loss function between the second rendered image and the sample image; and optimize the parameter of the three-dimensional Gaussian body based on the second loss function, to obtain the optimized three-dimensional Gaussian body.

In a possible implementation, the foregoing optimization module 1602 is specifically configured to: determine an appearance-related parameter based on the appearance latent variable, where the appearance-related parameter is used to adjust an appearance parameter of a rendered image of the three-dimensional Gaussian body; and optimize the parameter of the three-dimensional Gaussian body based on the appearance-related parameter.

FIG. 17 is a diagram of a structure of a data processing apparatus 1700 according to the present disclosure. The data processing apparatus 1700 includes:

an obtaining module 1701, configured to obtain, based on an image in a cell, a three-dimensional Gaussian body in the cell, where the cell is any one of a plurality of cells in a scene;

a rendering module 1702, configured to render the three-dimensional Gaussian body to obtain a first rendered image;

an analysis module 1703, configured to analyze the first rendered image and a feature parameter by using a neural network model, to obtain a second rendered image, where the feature parameter is used to adjust an appearance parameter of the first rendered image; and

an optimization module 1704, configured to optimize a parameter of the three-dimensional Gaussian body based on a difference between the first rendered image and a sample image and a difference between the second rendered image and the sample image, to obtain an optimized three-dimensional Gaussian body, where the optimized three-dimensional Gaussian body is used to represent the cell.

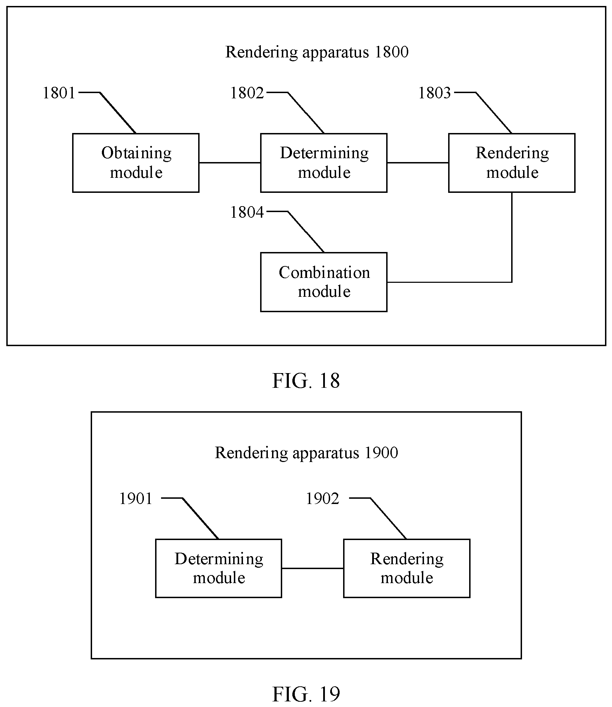

FIG. 18 is a diagram of a structure of a rendering apparatus 1800 according to the present disclosure. The rendering apparatus 1800 includes:

an obtaining module 1801, configured to obtain a pose of a photographing device in a scene, where the scene is partitioned into a plurality of cells;

a determining module 1802, configured to determine, based on the pose of the photographing device, a three-dimensional Gaussian body in a cell corresponding to the photographing device;

a rendering module 1803, configured to render a three-dimensional Gaussian body in each cell to obtain a rendered image in each cell; and

a combination module 1804, configured to combine rendered images of all cells to obtain a target rendered image.

In a possible implementation, the determining module 1802 is specifically configured to: determine, based on the pose of the photographing device, the cell corresponding to the photographing device; and delete an invisible three-dimensional Gaussian body in the cell based on marking information of the three-dimensional Gaussian body in the cell, to obtain the three-dimensional Gaussian body in the cell corresponding to the photographing device.

In a possible implementation, the rendering module 1803 is specifically configured to: calculate a depth between the three-dimensional Gaussian body in each cell and the photographing device; determine a target three-dimensional Gaussian body in each cell based on the depth and a projection area of the three-dimensional Gaussian body in each cell; and render the target three-dimensional Gaussian body in each cell to obtain the rendered image in each cell.

In a possible implementation, the rendering module 1803 is specifically configured to: determine, based on the depth, a to-be-deleted three-dimensional Gaussian body in each cell from the three-dimensional Gaussian body in each cell; determine, based on the depth, a first preset threshold of the projection area of the three-dimensional Gaussian body in each cell; and delete, based on the to-be-deleted three-dimensional Gaussian body in each cell and the first preset threshold, a three-dimensional Gaussian body whose projection area is less than the preset threshold from the to-be-deleted three-dimensional Gaussian body, to obtain the target three-dimensional Gaussian body.

In a possible implementation, the rendering module 1803 is specifically configured to: randomly delete a preset quantity of three-dimensional Gaussian bodies from the three-dimensional Gaussian body in each cell, to obtain a target three-dimensional Gaussian body in each cell; and render the target three-dimensional Gaussian body in each cell to obtain the rendered image in each cell.

In a possible implementation, the rendering module 1803 is specifically configured to: calculate a first volume of the three-dimensional Gaussian body in each cell; delete, based on the first volume, a three-dimensional Gaussian body whose first volume exceeds a second preset threshold, to obtain the target three-dimensional Gaussian body; and render the target three-dimensional Gaussian body in each cell to obtain the rendered image in each cell.

In a possible implementation, the rendering module 1803 is specifically configured to: randomly determine a to-be-deleted three-dimensional Gaussian body from the three-dimensional Gaussian body in each cell; calculate a second volume of the three-dimensional Gaussian body in each cell; delete a three-dimensional Gaussian body whose second volume exceeds a third preset threshold from the to-be-deleted three-dimensional Gaussian body, to obtain the target three-dimensional Gaussian body; and render the target three-dimensional Gaussian body in each cell to obtain the rendered image in each cell.

FIG. 19 is a diagram of a structure of a rendering apparatus 1900 according to the present disclosure. Details are as follows.

A determining module 1901 is configured to determine, based on marking information of a three-dimensional Gaussian body in a cell, a target three-dimensional Gaussian body from the three-dimensional Gaussian body, where the target three-dimensional Gaussian body is a three-dimensional Gaussian body identified by a photographing device in the cell; and

A rendering module 1902 is configured to render the target three-dimensional Gaussian body to obtain a rendered image in the cell.

In a possible implementation, the foregoing determining module 1801 is specifically configured to: determine, based on the marking information of the three-dimensional Gaussian body in the cell, a visible three-dimensional Gaussian body in the cell as the target three-dimensional Gaussian body.

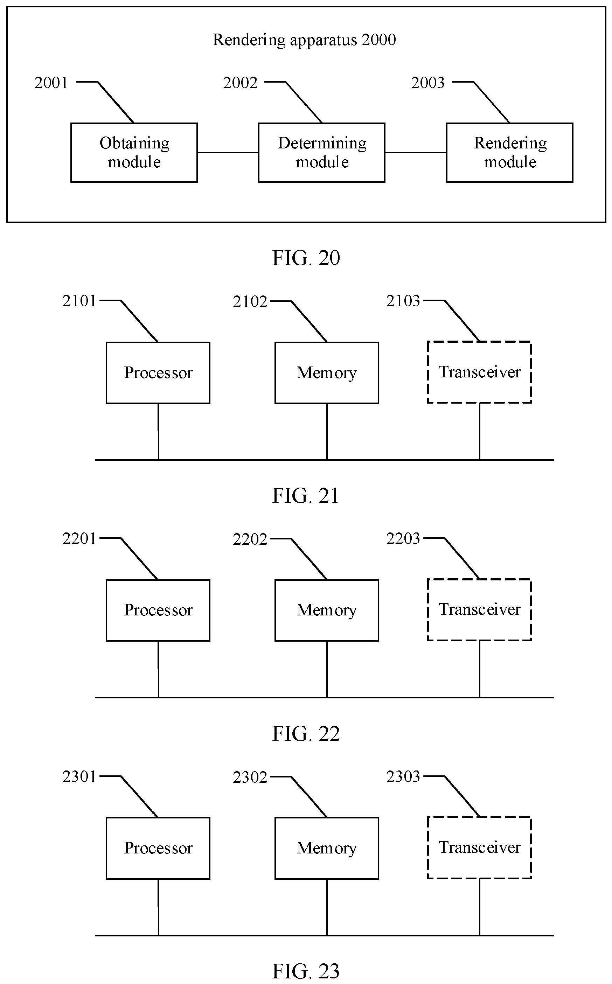

FIG. 20 is a diagram of a structure of a rendering apparatus 2000 according to the present disclosure. Details are as follows.

An obtaining module 2001 is configured to obtain, based on an image in a cell, a three-dimensional Gaussian body in the cell.

A determining module 2002 is configured to determine a target three-dimensional Gaussian body in the cell from the three-dimensional Gaussian body in the cell based on one or more of a depth of the three-dimensional Gaussian body and a projection area or a volume of the three-dimensional Gaussian body, where a quantity of target three-dimensional Gaussian bodies is less than a quantity of three-dimensional Gaussian bodies.

A rendering module 2003 is configured to render the target three-dimensional Gaussian body to obtain a rendered image in the cell.

In a possible implementation, the foregoing determining module 2002 is specifically configured to: determine the target three-dimensional Gaussian body in the cell from the three-dimensional Gaussian body in the cell based on the depth and the projection area of the three-dimensional Gaussian body; and determine the target three-dimensional Gaussian body in the cell from the three-dimensional Gaussian body in the cell based on the volume of the three-dimensional Gaussian body.

In a possible implementation, the foregoing determining module 2002 is specifically configured to: determine, based on the depth of the three-dimensional Gaussian body, a to-be-rendered three-dimensional Gaussian body in the cell from the three-dimensional Gaussian body in the cell; determine, based on the depth of the three-dimensional Gaussian body, a first preset value of the projection area of the three-dimensional Gaussian body in the cell; and determine, based on the to-be-rendered three-dimensional Gaussian body in the cell and the first preset threshold, a three-dimensional Gaussian body whose projection area is greater than or equal to the first preset value in the to-be-rendered three-dimensional Gaussian body as the target three-dimensional Gaussian body.

In a possible implementation, the foregoing determining module 2002 is specifically configured to: calculate a first volume of the three-dimensional Gaussian body in the cell; and determine a three-dimensional Gaussian body whose first volume is less than or equal to a second preset threshold as the target three-dimensional Gaussian body.

In a possible implementation, the foregoing determining module 2002 is specifically configured to: randomly determine the to-be-rendered three-dimensional Gaussian body from the three-dimensional Gaussian body in the cell; calculate a second volume of the three-dimensional Gaussian body in the cell; and determine a three-dimensional Gaussian body whose second volume is less than or equal to a third preset threshold in the to-be-rendered three-dimensional Gaussian body as the target three-dimensional Gaussian body.

In a possible implementation, before rendering the target three-dimensional Gaussian body to obtain the rendered image of the cell, the foregoing determining module 2002 is further configured to: randomly determine a preset quantity of three-dimensional Gaussian bodies from the three-dimensional Gaussian body in the cell as the target three-dimensional Gaussian body.

In a possible implementation, the cell is any one of the plurality of cells in the three-dimensional reconstruction apparatus.

FIG. 21 is a diagram of a structure of another three-dimensional reconstruction apparatus according to the present disclosure. Details are as follows.

The three-dimensional reconstruction apparatus may include a processor 2101 and a memory 2102. The processor 2101 and the memory 2102 are interconnected through a line. The memory 2102 stores program instructions and data.

The memory 2102 stores program instructions and data corresponding to the steps in FIG. 2, FIG. 5, and FIG. 6.

The processor 2101 is configured to perform the method steps performed by the three-dimensional reconstruction apparatus shown in any embodiment of FIG. 2, FIG. 5, and FIG. 6.

Optionally, the three-dimensional reconstruction apparatus may further include a transceiver 2103, configured to receive or send data.

An embodiment of the present disclosure further provides a computer-readable storage medium. The computer-readable storage medium stores a program. When the program is run on a computer, the computer is enabled to perform the steps in the methods described in the embodiments shown in FIG. 2, FIG. 5, and FIG. 6.

Optionally, the three-dimensional reconstruction apparatus shown in FIG. 21 is a chip.

An embodiment of the present disclosure further provides a three-dimensional reconstruction apparatus. The three-dimensional reconstruction apparatus may also be referred to as a digital processing chip or a chip. The chip includes a processing unit and a communication interface. The processing unit obtains program instructions through the communication interface. When the program instructions are executed by the processing unit, the processing unit is configured to perform the method steps performed by the three-dimensional reconstruction apparatus shown in any one of the embodiments in FIG. 2, FIG. 5, and FIG. 6.

FIG. 22 is a diagram of a structure of another data processing apparatus according to the present disclosure. Details are as follows.

The data processing apparatus may include a processor 2201 and a memory 2202. The processor 2201 and the memory 2202 are interconnected through a line. The memory 2202 stores program instructions and data.

The memory 2202 stores program instructions and data corresponding to the steps in FIG. 7.

The processor 2201 is configured to perform the method steps performed by the data processing apparatus shown in the embodiment in FIG. 7.

Optionally, the data processing apparatus may further include a transceiver 2203, configured to receive or send data.

An embodiment of the present disclosure further provides a computer-readable storage medium. The computer-readable storage medium stores a program. When the program is run on a computer, the computer is enabled to perform the steps in the method described in the embodiment shown in FIG. 7.

Optionally, the data processing apparatus shown in FIG. 22 is a chip.

An embodiment of the present disclosure further provides a data processing apparatus. The data processing apparatus may also be referred to as a digital processing chip or a chip. The chip includes a processing unit and a communication interface. The processing unit obtains program instructions through the communication interface. When the program instructions are executed by the processing unit, the processing unit is configured to perform the method steps performed by the data processing apparatus shown in the embodiment in FIG. 7.

FIG. 23 is a diagram of a structure of another rendering apparatus according to the present disclosure. Details are as follows.

The rendering apparatus may include a processor 2301 and a memory 2302. The processor 2301 and the memory 2302 are interconnected through a line. The memory 2302 stores program instructions and data.

The memory 2302 stores program instructions and data corresponding to the steps in FIG. 8, FIG. 9, FIG. 11, FIG. 12, and FIG. 14.

The processor 2301 is configured to perform the method steps performed by the rendering apparatus shown in FIG. 8, FIG. 9, FIG. 11, FIG. 12, and FIG. 14.

Optionally, the rendering apparatus may further include a transceiver 2303, configured to receive or send data.

An embodiment of the present disclosure further provides a computer-readable storage medium. The computer-readable storage medium stores a program. When the program is run on a computer, the computer is enabled to perform the steps in the methods described in the embodiments shown in FIG. 8, FIG. 9, FIG. 11, FIG. 12, and FIG. 14.

Optionally, the rendering apparatus shown in FIG. 18 is a chip.

An embodiment of the present disclosure further provides a rendering apparatus. The rendering apparatus may also be referred to as a digital processing chip or a chip. The chip includes a processing unit and a communication interface. The processing unit obtains program instructions through the communication interface. When the program instructions are executed by the processing unit, the processing unit is configured to perform the method steps performed by the training apparatus shown in the embodiments in FIG. 8, FIG. 9, FIG. 11, FIG. 12, and FIG. 14.

An embodiment of the present disclosure further provides a digital processing chip. The digital processing chip integrates a circuit and one or more interfaces that are configured to implement functions of the processor 2101, the processor 2201, and the processor 2301, or the processor 2101, the processor 2201, and the processor 2301. When a memory is integrated into the digital processing chip, the digital processing chip may complete the method steps in any one or more of the foregoing embodiments. When a memory is not integrated into the digital processing chip, the digital processing chip may be connected to an external memory through a communication interface. The digital processing chip implements, based on program code stored in the external memory, an action performed by the three-dimensional reconstruction apparatus or the rendering apparatus in the foregoing embodiment.

An embodiment of the present disclosure further provides a computer program product. When the computer program product runs on a computer, the computer is enabled to perform the method steps described in the embodiments shown in FIG. 2, FIG. 5, FIG. 6, FIG. 7, FIG. 8, FIG. 9, FIG. 11, FIG. 12, or FIG. 14.

The three-dimensional reconstruction apparatus or the rendering apparatus provided in this embodiment of the present disclosure may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in the server to perform the method described in the embodiment shown in FIG. 2, FIG. 5, FIG. 6, FIG. 7, FIG. 8, FIG. 9, FIG. 11, FIG. 12, or FIG. 14. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general purpose processor may be a microprocessor or any regular processor or the like.

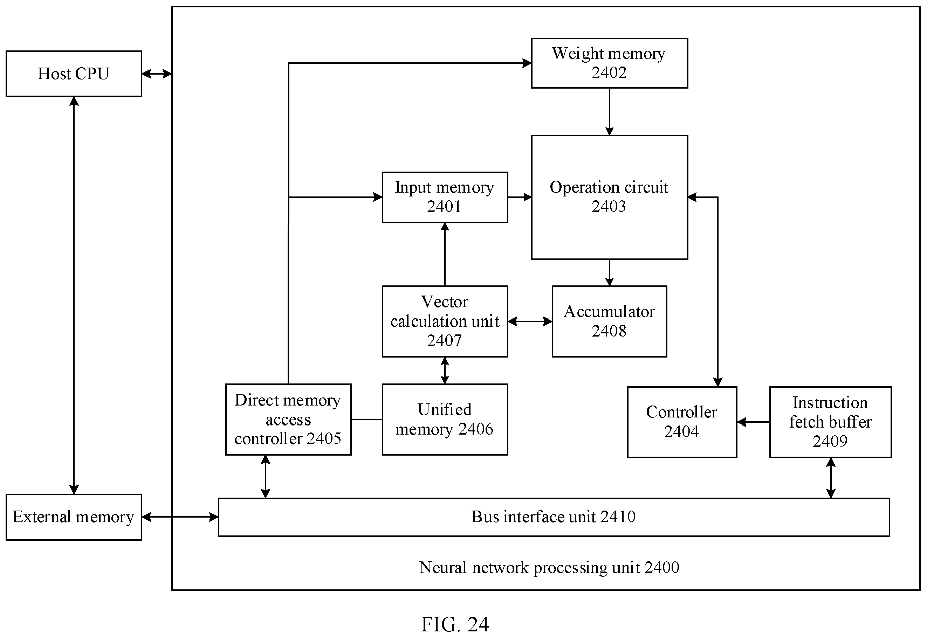

For example, FIG. 24 is a diagram of a structure of a chip according to an embodiment of the present disclosure. The chip may be represented as a neural network processing unit NPU 2400. The NPU 2400 is mounted to a host CPU (Host CPU) as a coprocessor, and the host CPU allocates a task. A core part of the NPU is an operation circuit 2403. The operation circuit 2403 is controlled by a controller 2404 to extract matrix data in a memory and perform a multiplication operation.

In some implementations, the operation circuit 2403 includes a plurality of processing units (process engine, PE). In some implementations, the operation circuit 2403 is a two-dimensional systolic array. The operation circuit 2403 may alternatively be a one-dimensional systolic array or another electronic circuit that can perform mathematical operations such as multiplication and addition. In some implementations, the operation circuit 2403 is a general-purpose matrix processor.

For example, it is assumed that there is an input matrix A, a weight matrix B, and an output matrix C. The operation circuit fetches data corresponding to the matrix B from a weight memory 2402, and buffers the data on each PE in the operation circuit. The operation circuit fetches data of the matrix A from an input memory 2401, performs a matrix operation on the data of the matrix A and the matrix B, to obtain a partial result or a final result of the matrix, and stores the result in an accumulator (accumulator) 2408.

A unified memory 2406 is configured to store input data and output data. Weight data is directly transferred to the weight memory 2402 by using a direct memory access controller DMAC (direct memory access controller, DMAC) 2405. The input data is also transferred to the unified memory 2406 by using the DMAC.

A bus interface unit (bus interface unit, BIU) 2410 is configured for interaction between an AXI bus, a DMAC, and an instruction fetch buffer (instruction fetch buffer, IFB) 2409.

The bus interface unit 2410 (bus interface unit, BIU) is used by the instruction fetch buffer 2409 to obtain instructions from an external memory, and is further used by the storage unit to access controller 2405 to obtain original data of the input matrix A or the weight matrix B from the external memory.

The DMAC is mainly configured to transfer input data in the external memory DDR to the unified memory 2406, transfer weight data to the weight memory 2402, or transfer input data to the input memory 2401.

A vector calculation unit 2407 includes a plurality of operation processing units. When necessary, further processing is performed on an output of the operation circuit, such as vector multiplication, vector addition, an exponential operation, a logarithmic operation, and size comparison. The vector calculation unit 2407 is mainly configured to perform network calculation at a non-convolutional/fully connected layer in a neural network, for example, batch normalization (batch normalization), pixel-level summation, and up-sampling on a feature map.

In some implementations, the vector calculation unit 2407 can store a processed output vector in the unified memory 2406. For example, the vector calculation unit 2407 may apply a linear function and/or a non-linear function to the output of the operation circuit 2403, for example, perform linear interpolation on a feature plane extracted at a convolutional layer, and for another example, accumulate vectors of values to generate an activation value. In some implementations, the vector calculation unit 2407 generates a normalized value, a pixel-level sum, or both. In some implementations, the processed output vector can be used as an activation input of the operation circuit 2403, for example, used at a subsequent layer in the neural network.

The instruction fetch buffer (instruction fetch buffer) 2409 connected to the controller 2404 is configured to store instructions used by the memory controller 2404.

The unified memory 2406, the input memory 2401, the weight memory 2402, and the instruction fetch buffer 2409 are all on-chip memories. The external memory is private for a hardware architecture of the NPU.

The processor mentioned above may be a general-purpose central processing unit, a microprocessor, an ASIC, or one or more integrated circuits configured to control a program of the method in FIG. 2, FIG. 5, FIG. 6, FIG. 7, FIG. 8, FIG. 9, FIG. 11, FIG. 12, or FIG. 14.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual requirements to achieve the objectives of the solutions of embodiments. In addition, in the accompanying drawings of the apparatus embodiments provided by the present disclosure, connection relationships between modules indicate that the modules have communication connections with each other, which may be specifically implemented as one or more communication buses or signal cables.

Based on the descriptions of the foregoing implementations, a person skilled in the art may clearly understand that for the purpose of convenient and brief description, for detailed working processes of the foregoing system, apparatus, and unit, refer to corresponding processes in the foregoing method embodiments. Details are not described herein again.

In the several embodiments provided in the present disclosure, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all the units may be selected based on actual requirements to achieve the objectives of the solutions of embodiments.

In addition, functional units in embodiments of the present disclosure may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the present disclosure essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of the present disclosure. The foregoing storage medium includes any medium that can store program code, such as a USB flash drive, a removable hard disk, a read-only memory (ROM, read-only memory), a random access memory (RAM, random access memory), a magnetic disk, or an optical disc.

In the specification, claims, and accompanying drawings of the present disclosure, the terms "first", "second", "third", "fourth", and so on (if existent) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of the present disclosure. However, the protection scope of the present disclosure is not limited thereto. Any change or replacement readily figured out by a person skilled in the art within the technical scope disclosed in the present disclosure shall fall within the protection scope of the present disclosure.

## Claims

1. A three-dimensional reconstruction method, comprising:

   obtaining a plurality of images for a scene, wherein the scene comprises a plurality of cells;
   assigning the plurality of images to the plurality of cells based on poses of photographing devices corresponding to the plurality of images, to obtain at least one image in each cell;
   obtaining at least one three-dimensional Gaussian body in each cell based on the at least one image in each cell, wherein the at least one three-dimensional Gaussian body is used to represent the cell in the scene; and

combining the at least one three-dimensional Gaussian body in each cell to obtain a combined three-dimensional Gaussian body, wherein the combined three-dimensional Gaussian body represents the scene.

2. The method according to claim 1, wherein assigning the plurality of images to the plurality of cells based on the poses of the photographing devices corresponding to the plurality of images, to obtain the at least one image in each cell comprises:

   determining, based on a pose of a photographing device corresponding to each image, projection information of each cell in the photographing device corresponding to each image, wherein the projection information comprises a projection area of each cell in the photographing device; and
   assigning each image to a corresponding cell in the plurality of cells based on the projection information of each cell in the photographing device corresponding to each image, to obtain the at least one image in each cell.

3. The method according to claim 2, wherein the method further comprises:

   obtaining a plurality of pieces of point cloud data of each image; and
   assigning the plurality of pieces of point cloud data based on the pose of each image, to obtain a cell point cloud of each cell, wherein the cell point cloud comprises at least one piece of point cloud data, and the cell point cloud of each cell is used to obtain the three-dimensional Gaussian body in each cell.

4. The method according to claim 3, wherein assigning the plurality of pieces of point cloud data based on the pose of each image, to obtain the cell point cloud of each cell comprises:

   determining, based on the pose of each image, a point cloud ratio of the photographing device corresponding to each image, wherein the point cloud ratio is a ratio of a quantity of point clouds of each cell observed by the photographing device to a quantity of total point cloud data observed by the photographing device; and
   assigning the plurality of pieces of point cloud data to corresponding cells in the plurality of cells based on the point cloud ratio of the photographing device corresponding to each image.

5. The method according to claim 4, wherein assigning the plurality of pieces of point cloud data to the corresponding cells in the plurality of cells based on the point cloud ratio of the photographing device corresponding to each image comprises:

   determining a photographing device in each cell based on the point cloud ratio of the photographing device corresponding to each image; and
   assigning the plurality of pieces of point cloud data to the corresponding cells in the plurality of cells based on the photographing device in each cell, to obtain the at least one piece of point cloud data of each cell.

6. The method according to either claim 1 or 5, wherein the method further comprises:
   optimizing a parameter of the three-dimensional Gaussian body to obtain an optimized three-dimensional Gaussian body, wherein the parameter is used to adjust an appearance parameter of the three-dimensional Gaussian body after rendering.

7. The method according to claim 6, wherein optimizing the parameter of the three-dimensional Gaussian body to obtain the optimized three-dimensional Gaussian body comprises:

   rendering the three-dimensional Gaussian body to obtain a first rendered image;
   analyzing the first rendered image and an appearance latent variable by using a neural network model, to obtain a second rendered image, wherein the appearance latent variable is used to identify the first rendered image; and
   optimizing the parameter of the three-dimensional Gaussian body based on a difference between the first rendered image and a sample image and a difference between the second rendered image and the sample image, to obtain the optimized three-dimensional Gaussian body.

8. The method according to claim 7, wherein analyzing the first rendered image and the appearance latent variable by using the neural network model, to obtain the second rendered image comprises:

   performing down-sampling on the first rendered image to obtain a temporary rendered image; and
   analyzing the temporary rendered image and the appearance latent variable by using the neural network model,

to obtain the second rendered image.

9. The method according to claim 7 or 8, wherein optimizing the parameter of the three-dimensional Gaussian body based on the difference between the first rendered image and the sample image and the difference between the second rendered image and the sample image, to obtain the optimized three-dimensional Gaussian body comprises:

calculating a first loss function between the first rendered image and the sample image;
calculating a second loss function between the second rendered image and the sample image; and
optimizing the parameter of the three-dimensional Gaussian body based on the first loss function and the second loss function, to obtain the optimized three-dimensional Gaussian body.

10. The method according to claim 6, wherein optimizing the parameter of the three-dimensional Gaussian body to obtain the optimized three-dimensional Gaussian body comprises:

performing analysis by using a fully connected network based on the pose, to obtain an appearance-related parameter, wherein the appearance-related parameter is used to adjust an appearance parameter of a rendered image of the three-dimensional Gaussian body; and
optimizing the parameter of the three-dimensional Gaussian body based on the appearance-related parameter.

11. A data processing method, comprising:

obtaining an appearance latent variable, wherein the appearance latent variable is used to identify a rendered image obtained by rendering a three-dimensional Gaussian body in a cell; and
optimizing a parameter of the three-dimensional Gaussian body based on the appearance latent variable, to obtain an optimized three-dimensional Gaussian body, wherein the optimized three-dimensional Gaussian body is used to represent the cell.

12. The method according to claim 11, wherein optimizing the parameter of the three-dimensional Gaussian body based on the appearance latent variable, to obtain the optimized three-dimensional Gaussian body comprises:

rendering the three-dimensional Gaussian body in the cell to obtain a first rendered image;
analyzing the first rendered image and the appearance latent variable to obtain a second rendered image; and
optimizing the parameter of the three-dimensional Gaussian body based on a difference between the first rendered image and a sample image and a difference between the second rendered image and the sample image, to obtain the optimized three-dimensional Gaussian body.

13. The method according to claim 11, wherein optimizing the parameter of the three-dimensional Gaussian body based on the appearance latent variable, to obtain the optimized three-dimensional Gaussian body comprises:

rendering the three-dimensional Gaussian body in the cell to obtain a first rendered image;
analyzing the first rendered image and the appearance latent variable to obtain a second rendered image; and
optimizing the parameter of the three-dimensional Gaussian body based on a difference between the second rendered image and the sample image, to obtain the optimized three-dimensional Gaussian body.

14. The method according to claim 11, wherein optimizing the parameter of the three-dimensional Gaussian body based on the appearance latent variable, to obtain the optimized three-dimensional Gaussian body comprises:

determining an appearance-related parameter based on the appearance latent variable, wherein the appearance-related parameter is used to adjust an appearance parameter of a rendered image of the three-dimensional Gaussian body; and
optimizing the parameter of the three-dimensional Gaussian body based on the appearance-related parameter.

15. A data processing method, comprising:

obtaining, based on an image in a cell, a three-dimensional Gaussian body in the cell, wherein the cell is any one of a plurality of cells in a scene;
rendering the three-dimensional Gaussian body to obtain a first rendered image;
analyzing the first rendered image and a feature parameter by using a neural network model, to obtain a second rendered image, wherein the feature parameter is used to adjust an appearance parameter of the first rendered image; and

optimizing a parameter of the three-dimensional Gaussian body based on a difference between the first rendered image and a sample image and a difference between the second rendered image and the sample image, to obtain an optimized three-dimensional Gaussian body, wherein the optimized three-dimensional Gaussian body is used to represent the cell.

16. A rendering method, comprising:

obtaining a pose of a photographing device in a scene, wherein the scene is partitioned into a plurality of cells;

determining, based on the pose of the photographing device, a three-dimensional Gaussian body in a cell corresponding to the photographing device;

rendering a three-dimensional Gaussian body in each cell to obtain a rendered image in each cell; and

combining rendered images of all cells to obtain a target rendered image.

17. The method according to claim 16, wherein determining, based on the pose of the photographing device, the three-dimensional Gaussian body in the cell corresponding to the photographing device comprises:

determining, based on the pose of the photographing device, the cell corresponding to the photographing device; and

deleting an invisible three-dimensional Gaussian body in the cell based on marking information of the three-dimensional Gaussian body in the cell, to obtain the three-dimensional Gaussian body in the cell corresponding to the photographing device.

18. The method according to claim 16 or 17, wherein rendering the three-dimensional Gaussian body in each cell to obtain the rendered image in each cell comprises:

calculating a depth between the three-dimensional Gaussian body in each cell and the photographing device;

determining a target three-dimensional Gaussian body in each cell based on the depth and a projection area of the three-dimensional Gaussian body in each cell; and

rendering the target three-dimensional Gaussian body in each cell to obtain the rendered image in each cell.

19. The method according to claim 18, wherein determining the target three-dimensional Gaussian body in each cell based on the depth and the projection area of the three-dimensional Gaussian body in each cell comprises:

determining, based on the depth, a to-be-deleted three-dimensional Gaussian body in each cell from the three-dimensional Gaussian body in each cell;

determining, based on the depth, a first preset threshold of the projection area of the three-dimensional Gaussian body in each cell; and

deleting, based on the to-be-deleted three-dimensional Gaussian body in each cell and the first preset threshold, a three-dimensional Gaussian body whose projection area is less than the first preset threshold from the to-be-deleted three-dimensional Gaussian body, to obtain the target three-dimensional Gaussian body.

20. The method according to claim 16 or 17, wherein rendering the three-dimensional Gaussian body in each cell to obtain the rendered image in each cell comprises:

randomly deleting a preset quantity of three-dimensional Gaussian bodies from the three-dimensional Gaussian body in each cell, to obtain a target three-dimensional Gaussian body in each cell; and

rendering the target three-dimensional Gaussian body in each cell to obtain the rendered image in each cell.

21. The method according to claim 16 or 17, wherein rendering the three-dimensional Gaussian body in each cell to obtain the rendered image in each cell comprises:

calculating a first volume of the three-dimensional Gaussian body in each cell;

deleting, based on the first volume, a three-dimensional Gaussian body whose first volume exceeds a second preset threshold, to obtain the target three-dimensional Gaussian body; and

rendering the target three-dimensional Gaussian body in each cell to obtain the rendered image in each cell.

22. The method according to claim 16 or 17, wherein rendering the three-dimensional Gaussian body in each cell to obtain the rendered image in each cell comprises:

   randomly determining a to-be-deleted three-dimensional Gaussian body from the three-dimensional Gaussian body in each cell;
   calculating a second volume of the three-dimensional Gaussian body in each cell;
   deleting a three-dimensional Gaussian body whose second volume exceeds a third preset threshold from the to-be-deleted three-dimensional Gaussian body, to obtain the target three-dimensional Gaussian body; and
   rendering the target three-dimensional Gaussian body in each cell to obtain the rendered image in each cell.

23. A rendering method, comprising:

   determining, based on marking information of a three-dimensional Gaussian body in a cell, a target three-dimensional Gaussian body from the three-dimensional Gaussian body, wherein the target three-dimensional Gaussian body is a three-dimensional Gaussian body identified by a photographing device in the cell; and
   rendering the target three-dimensional Gaussian body to obtain a rendered image in the cell.

24. A rendering method, comprising:

   obtaining, based on an image in a cell, a three-dimensional Gaussian body in the cell;
   determining a target three-dimensional Gaussian body in the cell from the three-dimensional Gaussian body in the cell based on one or more of a depth of the three-dimensional Gaussian body and a projection area or a volume of the three-dimensional Gaussian body, wherein a quantity of target three-dimensional Gaussian bodies is less than a quantity of three-dimensional Gaussian bodies; and
   rendering the target three-dimensional Gaussian body to obtain a rendered image in the cell.

25. The method according to claim 24, wherein determining the target three-dimensional Gaussian body in the cell from the three-dimensional Gaussian body in the cell based on one or more of the depth of the three-dimensional Gaussian body and the projection area or the volume of the three-dimensional Gaussian body comprises:

   determining the target three-dimensional Gaussian body in the cell from the three-dimensional Gaussian body in the cell based on the depth and the projection area of the three-dimensional Gaussian body; and
   determining the target three-dimensional Gaussian body in the cell from the three-dimensional Gaussian body in the cell based on the volume of the three-dimensional Gaussian body.

26. The method according to claim 25, wherein determining the target three-dimensional Gaussian body in the cell from the three-dimensional Gaussian body in the cell based on the depth and the projection area of the three-dimensional Gaussian body comprises:

   determining, based on the depth of the three-dimensional Gaussian body, a to-be-rendered three-dimensional Gaussian body in the cell from the three-dimensional Gaussian body in the cell;
   determining, based on the depth of the three-dimensional Gaussian body, a first preset value of the projection area of the three-dimensional Gaussian body in the cell; and
   determining, based on the to-be-rendered three-dimensional Gaussian body in the cell and the first preset threshold, a three-dimensional Gaussian body whose projection area is greater than or equal to the first preset value in the to-be-rendered three-dimensional Gaussian body as the target three-dimensional Gaussian body.

27. The method according to claim 25, wherein determining the target three-dimensional Gaussian body in the cell from the three-dimensional Gaussian body in the cell based on the volume of the three-dimensional Gaussian body comprises:

   calculating a first volume of the three-dimensional Gaussian body in the cell; and
   determining a three-dimensional Gaussian body whose first volume is less than or equal to a second preset threshold as the target three-dimensional Gaussian body.

28. The method according to claim 25, wherein determining the target three-dimensional Gaussian body in the cell from the three-dimensional Gaussian body in the cell based on the volume of the three-dimensional Gaussian body comprises:

randomly determining the to-be-rendered three-dimensional Gaussian body from the three-dimensional Gaussian body in the cell;

calculating a second volume of the three-dimensional Gaussian body in the cell; and

determining a three-dimensional Gaussian body whose second volume is less than or equal to a third preset threshold in the to-be-rendered three-dimensional Gaussian body as the target three-dimensional Gaussian body.

29. The method according to any one of claims 24 to 28, wherein the cell is any one of the plurality of cells according to any one of claims 1 to 10.

30. A three-dimensional reconstruction apparatus, comprising:

an obtaining module, configured to obtain a plurality of images for a scene, wherein the scene comprises a plurality of cells;

a assigning module, configured to assign the plurality of images to the plurality of cells based on poses of photographing devices corresponding to the plurality of images, to obtain at least one image in each cell, wherein the obtaining module is further configured to obtain at least one three-dimensional Gaussian body in each cell based on the at least one image in each cell, wherein the at least one three-dimensional Gaussian body is used to represent the cell in the scene; and

a combination module, configured to combine the at least one three-dimensional Gaussian body in each cell to obtain a combined three-dimensional Gaussian body, wherein the combined three-dimensional Gaussian body represents the scene.

31. A data processing apparatus, comprising:

an obtaining module, configured to obtain an appearance latent variable, wherein the appearance latent variable is used to identify a rendered image obtained by rendering a three-dimensional Gaussian body in a cell; and

an optimization module, configured to optimize a parameter of the three-dimensional Gaussian body based on the appearance latent variable, to obtain an optimized three-dimensional Gaussian body, wherein the optimized three-dimensional Gaussian body is used to represent the cell.

32. A data processing apparatus, comprising:

an obtaining module, configured to obtain, based on an image in a cell, a three-dimensional Gaussian body in the cell, wherein the cell is any one of a plurality of cells in a scene;

a rendering module, configured to render the three-dimensional Gaussian body to obtain a first rendered image;

an analysis module, configured to analyze the first rendered image and a feature parameter by using a neural network model, to obtain a second rendered image, wherein the feature parameter is used to adjust an appearance parameter of the first rendered image; and

an optimization module, configured to optimize a parameter of the three-dimensional Gaussian body based on a difference between the first rendered image and a sample image and a difference between the second rendered image and the sample image, to obtain an optimized three-dimensional Gaussian body, wherein the optimized three-dimensional Gaussian body is used to represent the cell.

33. A rendering apparatus, comprising:

an obtaining module, configured to obtain a pose of a photographing device in a scene, wherein the scene is partitioned into a plurality of cells;

a determining module, configured to determine, based on the pose of the photographing device, a three-dimensional Gaussian body in a cell corresponding to the photographing device;

a rendering module, configured to render a three-dimensional Gaussian body in each cell to obtain a rendered image in each cell; and

a combination module, configured to combine rendered images of all cells to obtain a target rendered image.

34. A rendering apparatus, comprising:

a determining module, configured to determine, based on marking information of a three-dimensional Gaussian body in a cell, a target three-dimensional Gaussian body from the three-dimensional Gaussian body, wherein the target three-dimensional Gaussian body is a three-dimensional Gaussian body identified by a photographing device in the cell; and

a rendering module, configured to render the target three-dimensional Gaussian body to obtain a rendered image in the cell.

35. A rendering apparatus, comprising:

an obtaining module, configured to obtain, based on an image in a cell, a three-dimensional Gaussian body in the cell;

a determining module, configured to determine a target three-dimensional Gaussian body in the cell from the three-dimensional Gaussian body in the cell based on one or more of a depth of the three-dimensional Gaussian body and a projection area or a volume of the three-dimensional Gaussian body, wherein a quantity of target three-dimensional Gaussian bodies is less than a quantity of three-dimensional Gaussian bodies; and

a rendering module, configured to render the target three-dimensional Gaussian body to obtain a rendered image in the cell.

36. A three-dimensional reconstruction apparatus, comprising:

a processor and a memory, wherein the processor is coupled to the memory;

the memory is configured to store a program; and

the processor is configured to execute the program in the memory, to perform the method according to any one of claims 1 to 10.

37. A data processing apparatus, comprising:

a processor and a memory, wherein the processor is coupled to the memory;

the memory is configured to store a program; and

the processor is configured to execute the program in the memory, to perform the method according to any one of claims 11 to 14 or 15.

38. A rendering apparatus, comprising:

a processor and a memory, wherein the processor is coupled to the memory;

the memory is configured to store a program; and

the processor is configured to execute the program in the memory, to perform the method according to any one of claims 16 to 22, 23, or 24 to 29.

39. A computer-readable storage medium, comprising instructions, wherein when the instructions are run on a computer, the computer is enabled to perform the method according to any one of claims 1 to 10, 11 to 14, 15, 16 to 22, 23, or 24 to 29.

40. A computer program product comprising instructions, wherein when the computer program product runs on a computer, the computer is enabled to perform the method according to any one of claims 1 to 10, 11 to 14, 15, 16 to 22, 23, or 24 to 29.

Terminal device 101 ⸺ Communication network ⸺ Server cluster 102

FIG. 1

Obtain a plurality of images in a scene ⸺ 201

Assign the plurality of images to a plurality of cells, to obtain at least one image in each cell ⸺ 202

Obtain at least one three-dimensional Gaussian body in each cell based on the at least one image in each cell ⸺ 203

Combine the at least one three-dimensional Gaussian body in each cell to obtain a combined three-dimensional Gaussian body ⸺ 204

FIG. 2

$\Omega_{ij}^{surf}$

$\Omega_i$

$\Omega_{ij}^{surf}$

$T_i$

$\Omega_{ij}^{surf} / \Omega_i > T_h$

Not selected

Other Cells

$j$-th Cell ($j$+1)-th Cell

Original solution:
Airspace-agnostic

$\Omega_i$

$\Omega_{ij}^{air}$

$T_i$

$\Omega_{ij}^{air} / \Omega_i > T_h$

Selected

$j$-th Cell

Our solution:
Airspace-aware

$j$-th Cell

Floater

Floater caused by
depth ambiguity

FIG. 3

⊂ Camera    ● Point cloud data    ⊂| Selected camera    ◎ Selected point cloud data

Input data    (a) Camera position-based cell partitioning    (b) Position-based data selection    (c) Visibility-based camera selection    (d) Coverage-based point selection

FIG. 4

EP 4 749 579 A1

501

Obtain a plurality of pieces of point cloud data in a scene

502

Assign the plurality of pieces of point cloud data based on a pose of a photographing device in the scene, to obtain cell point cloud data of each cell

503

Obtain a plurality of three-dimensional Gaussian bodies of each cell based on the point cloud data of each cell

FIG. 5

601

Obtain an image in a cell

602

Obtain a plurality of three-dimensional Gaussian bodies in the cell based on the image in the cell

603

Optimize a parameter of the three-dimensional Gaussian body to obtain an optimized three-dimensional Gaussian body

FIG. 6

701

Obtain an appearance latent variable

702

Optimize a parameter of a three-dimensional Gaussian body based on the appearance latent variable, to obtain an optimized three-dimensional Gaussian body

FIG. 7

Determine a cell of a photographing device based on a pose of the photographing device — 801

Determine a three-dimensional Gaussian body in the cell based on the cell of the photographing device — 802

Perform rendering based on a three-dimensional Gaussian body in each cell, to obtain a rendered image in each cell — 803

Combine rendered images of all cells to obtain a target rendered image — 804

FIG. 8

Determine a cell of a photographing device based on a pose of the photographing device — 901

Determine a visible three-dimensional Gaussian body in the cell based on the cell of the photographing device — 902

Perform rendering based on a visible three-dimensional Gaussian body in each cell, to obtain a rendered image in each cell — 903

Combine rendered images of all cells to obtain a target rendered image — 904

FIG. 9

FIG. 10

FIG. 11

FIG. 12

O kept

⬚ deleted

$id\%2 == 0$
$\&\ area < T$

$id\%2 == 0$
$\&\ id\%3 == 0$
$\&\ area < T$

distance

L0

L1

L2

FIG. 13

Determine a cell of a photographing device based on a pose of the photographing device | 1401

↓

Determine a visible three-dimensional Gaussian body in the cell based on the cell of the photographing device | 1402

↓

Determine a target three-dimensional Gaussian body based on a depth and a projection area that correspond to a visible three-dimensional Gaussian body in each cell | 1403

↓

Render the target three-dimensional Gaussian body in each cell to obtain a rendered image in each cell | 1404

↓

Combine rendered images of all cells to obtain a target rendered image | 1405

FIG. 14

Three-dimensional reconstruction apparatus

1501 — Obtaining module

1502 — Assigning module

1503 — Combination module

1504 — Optimization module

FIG. 15

Data processing apparatus 1600

1601

1602

Obtaining
module

Optimization
module

FIG. 16

Data processing apparatus 1700

1701

1702

1703

Obtaining
module

Rendering
module

Analysis
module

1704

Optimization
module

FIG. 17

Rendering apparatus 1800

1801 —

Obtaining
module

1802 —

Determining
module

1803 —

Rendering
module

1804 —

Combination
module

FIG. 18

Rendering apparatus 1900

1901 —

Determining
module

1902 —

Rendering
module

FIG. 19

Rendering apparatus 2000

2001 — Obtaining module — 2002 — Determining module — 2003 — Rendering module

FIG. 20

2101 — Processor    2102 — Memory    2103 — Transceiver

FIG. 21

2201 — Processor    2202 — Memory    2203 — Transceiver

FIG. 22

2301 — Processor    2302 — Memory    2303 — Transceiver

FIG. 23

```
                                    ┌──────────────────┐
                                    │  Weight memory   │
                                    │      2402        │
                                    └──────────────────┘
                                             │
                                             ▼
              ┌────────────────┐    ┌──────────────────┐
              │  Input memory  │───▶│ Operation circuit│◀─────┐
              │     2401       │    │      2403        │      │
              └────────────────┘    └──────────────────┘      │
                       ▲                      │               │
                       │                      ▼               │
              ┌────────────────┐    ┌──────────────────┐      │
              │     Vector     │◀──▶│   Accumulator    │      │
              │calculation unit│    │      2408        │      │
              │     2407       │    └──────────────────┘      │
              └────────────────┘                              │
                       │                                      │
                       ▼                                      ▼
  ┌────────────────┐ ┌────────────────┐  ┌──────────────┐ ┌──────────────┐
  │ Direct memory  │ │    Unified     │  │  Controller  │ │ Instruction  │
  │     access     │─│ memory 2406    │  │     2404     │◀│ fetch buffer │
  │controller 2405 │ │                │  └──────────────┘ │     2409     │
  └────────────────┘ └────────────────┘                   └──────────────┘
          ▲                                                        ▲
          ▼                                                        ▼
  ┌──────────────────────────────────────────────────────────────────────┐
  │                      Bus interface unit 2410                          │
  └──────────────────────────────────────────────────────────────────────┘
```

Host CPU

External memory

Neural network processing unit 2400

FIG. 24

## INTERNATIONAL SEARCH REPORT

| International application No. |
|---|
| **PCT/CN2024/135613** |

**A.    CLASSIFICATION OF SUBJECT MATTER**

G06T17/00(2006.01)i;  G06T19/20(2011.01)i;  G06T15/20(2011.01)i;  G06T7/77(2017.01)i

According to International Patent Classification (IPC) or to both national classification and IPC

**B.    FIELDS SEARCHED**

Minimum documentation searched (classification system followed by classification symbols)

IPC:  G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE; 百度; BAIDU; 读秀; DUXIU: 重建, 区域, 高斯, 划分, 渲染, reconstruction, region, gaussian, divide, render

**C.    DOCUMENTS CONSIDERED TO BE RELEVANT**

| Category* | Citation of document, with indication, where appropriate, of the relevant passages | Relevant to claim No. |
|---|---|---|
| X | CN 114581581 A (IMAGE DERIVATIVE INC.) 03 June 2022 (2022-06-03) description, paragraphs [0004]-[0090] | 1-40 |
| A | CN 116246026 A (BEIJING BAIDU NETCOM SCIENCE AND TECHNOLOGY CO., LTD.) 09 June 2023 (2023-06-09) entire document | 1-40 |
| A | CN 109155846 A (CLOUDMINDS (SHENZHEN) ROBOTICS SYSTEMS CO., LTD.) 04 January 2019 (2019-01-04) entire document | 1-40 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 January 2025** | **31 January 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/135613**

| Patent document cited in search report | | | Publication date (day/month/year) | Patent family member(s) | | | Publication date (day/month/year) |
|---|---|---|---|---|---|---|---|
| CN | 114581581 | A | 03 June 2022 | None | | | |
| CN | 116246026 | A | 09 June 2023 | CN | 116246026 | B | 08 August 2023 |
| CN | 109155846 | A | 04 January 2019 | WO | 2020034086 | A1 | 20 February 2020 |
| | | | | CN | 109155846 | B | 18 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410157546

- CN 202411291776